(19) Europäisches Patentamt
European Patent Office
Office européen des brevets

(11) Veröffentlichungsnummer: **0 150 747**
**B1**

(12) # EUROPÄISCHE PATENTSCHRIFT

(45) Veröffentlichungstag der Patentschrift: **18.03.87**

(51) Int. Cl.⁴: **C 02 F 3/10**, C 08 L 75/04

(21) Anmeldenummer: **85100287.3**

(22) Anmeldetag: **14.01.85**

(54) **Verwendung von hydrophilen, hochgefüllten Polyurethanmassen zur biologischen Abwasserreinigung.**

(30) Priorität: **26.01.84 DE 3402697**

(43) Veröffentlichungstag der Anmeldung: **07.08.85 Patentblatt 85/32**

(45) Bekanntmachung des Hinweises auf die Patenterteilung: **18.03.87 Patentblatt 87/12**

(84) Benannte Vertragsstaaten: **AT BE CH DE FR GB IT LI NL SE**

(56) Entgegenhaltungen:
**EP-A-0 017 888**
**DE-A-2 024 910**
**DE-A-2 725 510**
**US-A-3 779 906**
**US-A-4 137 200**

(73) Patentinhaber: **BAYER AG, Konzernverwaltung RP Patentabteilung, D-5090 Leverkusen 1 Bayerwerk (DE)**

(72) Erfinder: **Reischl, Artur, Dr., H.T. von- Böttinger-Strasse 19, D-5090 Leverkusen (DE)**
Erfinder: **Mack, Kurt, Dr., Claudiusweg 15, D-5600 Wuppertal (DE)**

**EP 0 150 747 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft die Verwendung von nicht aufschwimmenden, abriebfesten, keine wachstumsfähige Zellen bei der Herstellung enthaltenden, hochgefüllten, wasseraufnahmefähigen Polyurethan(harnstoff)massen als Träger für Biomassen bei der biologischen Abwasserreinigung, wobei diese Träger einen Gehalt von mehr als 15 Gew.-% und weniger als 95 Gew.-% (bezogen auf den wasserfreien Gehalt an füllstoffhaltigen Polyurethanen) an feinteiligen, fossilen Lignocellulosen oder deren Folgeprodukte enthaltenden Naturstoffen, vorzugsweise Torf oder Braunkohle, aber auch Steinkohle oder Koks, und/oder Aktivkohle und/oder feinteiligen Destillationsrückständen und/oder organischen Füllstoffen und/oder homogenen oder zelligen Kunststoffteilchen, insbesondere Polyurethan-Schaumstoff(Abfall)teilchen, aufweisen und hydrophile und/oder hydrophobe Polyurethan(harnstoff)e, vorzugsweise mit einem Gehalt an kationischen Gruppen, als die Füllstoffe bindende Matrix enthalten, wobei diese hochgefüllten Polyurethan(harnstoff)-Träger eine hohe Wasseraufnahmefähigkeit von mehr als 33 Gew.-% Wasser im gequollenen Träger besitzen.

Mit diesen Trägern kann eine verbesserte Reinigung von industriellen und kommunalen Abwässern in biologisch arbeitenden Kläranlagen erzielt werden, wobei durch erhöhte Abbauleistung ein gereinigtes Abwasser mit reduzierter Toxizität, verringertem Geruch, verbesserter Aufhellung und sehr geringem Restgehalt an organischen, abbaubaren Reststoffen erhalten wird.

Die organischen Bestandteile des Abwassers werden in Kläranlagen auf im wesentlichen biologischem Weg durch Mikroorganismen abgebaut. Unter den dabei angewandten Bedingungen erfolgt in sogenannten Belebtschlammbecken eine starke mikrobielle Vermehrung der hauptsächlich aus Bakterien bestehenden Biomasse unter weitgehender Assimilation, d.h. Umwandlung der organischen Verunreinigung. Der verbleibende Restgehalt an gelösten organischen Abwasserinhaltsstoffen ist nach Anwendung der üblichen Verfahren in vielen Fällen noch zu hoch, d.h. genügt nicht den verschärften Anforderungen an die Wasserreinheit. Deshalb wurden seit vielen Jahren zahlreiche Versuche unternommen und Verfahrensverbesserungen angestrebt, um den Gehalt der verbleibenden Abwasserinhaltstoffe weiter zu reduzieren. So wurde die Durchsatzleistung in den etwa 500 bis 30.000 $m^3$ fassenden Belebtschlammbecken, die Biomassen- und Sauerstoffkonzentration erhöht und in einigen Fällen zusätzliche Belebungsbecken gegebenenfalls unter Verwendung der Tropfkörper-Technologie nachgeschaltet. Auch eine zusätzliche Begasung (erhöhte Sauerstoffzufuhr) des Belebtschlammes wurde erprobt. Ferner wurden verschiedene spezielle Oxidationsverfahren ausgearbeitet, beispielsweise eine Ozon- oder Wasserstoffperoxid-Behandlung.

Ferner wurde die katalytische Oxidation der Abwasserinhaltsstoffe mittels Luft und unter Zugabe von Aktivkohle in Verbindung mit einer nachgeschalteten Fällung empfohlen (siehe z.B. DE-C 22 39 406, DE-C 30 25 353, A. Bauer et al., Chemie-Technik, Heft 6, Seite 3-9 (1982), K. Fischer et al., GWF-Wasser/Abwasser, Heft 2, Seite 58-64 (1981); R.E. Perrotti et al., Chemical Engineering Progress (CEP), Vol. 69 (11), 63-64 (1973), G. Wysocki et al., ZC-Chemie-Technik, 3 (6), 205-208 (1974) und 3. Bericht "Adsorptive Abwasserreinigung" (Oktober 1975) des Ausschußes Wasser und Abwasser beim VCIeV.).

Die vorgenannten Verfahren erwiesen sich jedoch technisch als zu aufwendig oder zu kostspielig oder der Abbaueffekt ist noch ungenügend. Die zahlreichen Versuche, Aktivkohle in der Wasserklärtechnik zu verwenden, scheiterten bisher trotz verbesserter Abbauleistung, weil die Aktivkohle sogar in ihrer gebundenen (granulierten) Form bereits bei sehr geringen Strömungen, die wenigstens zeitweise in den Klärbecken zwingend erforderlich sind, in einer nicht tolerierbaren Menge zerrieben und ausgetragen werden. Erfolgreiche Versuche einer ausreichend wirksamen hohen Menge und starken Bindung der Aktivkohle bei gleichzeitiger Erhaltung der Bioaktivität im Klärbecken sind bisher nicht bekannt geworden.

In der DE-A 30 32 882 (EP-A 46 900) und DE-A 30 32 869 (EP-A 46 901) wird die Verwendung eines makroporösen Stoffes mit geringem spezifischem Gewicht (10 - 200 kg/$m^3$) als Trägermaterial für nitrifizierende Bakterien bei der Belebtschlammklärung beschrieben. Es handelt sich z.B. um typische Polyurethanschaumstoffe. In ähnlicher Weise werden solche Schaumstoffteilchen in einem Verfahren und einer Vorrichtung zur anaeroben biologischen Abwasserreinigung beschrieben. Zu den bereits hier erzielten verbesserten Ergebnissen siehe z.B. gwf-Wasser/Abwasser, 124 (1983), Heft 5, 233-239. Derartige Schaumstoffe schwimmen jedoch in freien Belebtschlammbecken auf und führen zu verschiedenen Störungen des Prozesses. Stückige Schaumstoffe auf (u.a.) Polyurethanbasis wurden auch in verschiedenen, speziellen Verfahren als Schüttkörperfüllung (DE-C 28 39 872 und DE-B 2 550 818) oder als Tropfkörpermasse (österreichische PS 248 354) für die biologische Abwasserreinigung empfohlen.

In der EP-A 77 411 wird die Verwendung von PU-Schaumstoffstücken als Filtriermedium beschrieben, dessen Schmutzbeladung nach bestimmten Spülverfahren von Zeit zu Zeit zur Regenerierung des Schaumstoffs abgespült wird.

Auch die Kombination von oberflächenaktiven Feststoffen mit Mikroorganismen zur Erhöhung deren Aktivität bei Biokonversionsprozessen ist bekannt, beispielsweise wird in den DE-A 26 33 259 und DE-A 27 03 834 die Adsorption von Zellen an z.B. Aluminiumoxid, Bentonite und $SiO_2$ und deren nachfolgende Einbettung in Polyacrylate beschrieben. Ferner beschreibt die DE-A 26 29 692 die Einlagerung von Zellen in photohärtbare Polyurethane, die photohärtbare Acrylat-Doppelbindungen enthalten.

Ebenso ist die Einbettung von wachstumsfähigen Zellen in Polyurethan-Hydrogelen bekannt: siehe z.B. Tanaka et al., European Journal of Applied Microbiology and Biotechnology, 7, (1979) ab Seite 371. Auch in der DE-A 29 29 872 wurde ein Verfahren zur Herstellung von hydrophilen, gelförmigen oder geschäumten

Biokatalysatoren mit hoher Beladung an enzymatisch aktiver Substanz durch Polymereinschluß ganzer Zellen, von Zellfragmenten oder Enzymen, durch Mischen einer wäßrigen Suspension der enzymatisch aktiven Substanz mit hydrophilen Polyisocyanaten unter Bildung eines enzymatisch hochaktiven, hydrophilen Polyurethan-Netzwerks in Blockform oder perlförmiger Form beschrieben. Auf Seite 7 der genannten Offenlegungsschrift werden zum Stand der Technik auch weitere Veröffentlichungen genannt.

Die Herstellung von enzymatisch aktiven Substanzen enthaltenden Polyurethanen ist jedoch schwierig und schließt den Nachteil ein, daß durch die hohe Reaktionsfähigkeit der Isocyanatgruppen eine - zumindest teilweise - Abtötung von Bakterien, Zellen oder eine Inaktivierung von enzymatisch aktivem Material eintritt. In den Beispielen werden z.B. Restaktivitäten von 7 bis 48 % bestimmt. So ist es auch nicht günstig, lebende Bakterien in hydrophile Polyurethane bei der Herstellung einzubauen, um sie z.B. für die Reinigung von Abwässern einzusetzen. Die Einbaumenge solcher Bakterien ist begrenzt, ein Großteil der Bakterien wird zudem durch Isocyanatreaktionen desaktiviert und die ständige Herstellung aktiver, bakterienhaltiger Polyurethanmassen und ihre "Lebendlagerung" beinhaltet Herstellungs- und Lagerungsprobleme, um die zumeist mehrere tausend Kubikmeter fassenden Klärbecken mit der erforderlichen Menge und Konzentration an in Polymerer eingebauten Bakterien zu versorgen. Eine drastische Minderung der Wachstumsfähigkeit der Bakterien würde selbst beim örtlich direkten Einbau in der Kläranlage wegen ihrer kurzen Überlebungszeit bei der Immobilisierung im Reaktionsmedium eintreten.

Deshalb mußte nach wie vor die Aufgabe gelöst werden, für neue, wirtschaftliche und wirksame Verfahren zur verbesserten Abwasserreinigung geeignete Verfahren zur Herstellung neuartiger Trägermaterialien zu entwickeln.

Aufgabe der Erfindung ist die Bereitstellung von hydrophilen, nicht aufschwimmenden, hochgefüllten Polyurethan(harnstoff)massen, welche bei der biologischen Abwasserreinigung als Träger für Biomassen dienen können, wobei die Zugänglichkeit, Herstellung und Bevorratung einerseits gegeben sein soll und andererseits diese Trägermassen in den Kläranlagen nicht aufschwimmen, sondern gut abtrennbar bleiben, abriebfest, auch im Hinblick auf zugesetzte Füllstoffe wie Aktivkohle, Seesand und Braunkohlenstaub, sind, und für die Besiedelung mit Bakterien zum Abbau von organischen Stoffen in den zu klärenden Flüssigkeiten ein so gutes Trägermedium darstellen, daß ein möglichst hoher und verbesserter Kläreffekt eintritt und ein geklärtes Wasser hoher Qualität erhalten wird.

Überraschenderweise wurde nunmehr gefunden, daß die Abbauwirkung bei der Reinigung von Abwässern in biologisch arbeitenden Kläranlagen wesentlich verbessert werden kann, wenn man wasseraufnahmefähige, mit bestimmten Materialien hochgefüllte Polyurethan(harnstoff)massen in einer Menge von mindestens 0,5 g, bevorzugt über 10 g, besonders bevorzugt über 30 g, bezogen auf Trockenmasse pro Liter Klärmasse, bei einer maximalen Obergrenze, welche durch vollständige Volumenfüllung mit den gequollenen Polyurethan(harnstoff)massen gekennzeichnet ist, als Träger, auf denen Bakterien auf- und/oder einwachsen können, in biologisch arbeitenden Kläranlagen verwendet.

Gegenstand der Erfindung ist somit die Verwendung von Polyurethanen als Träger für Biomassen zur biologischen Abwasserreinigung, dadurch gekennzeichnet, daß man keine wachstumsfähige Zellen bei der Herstellung enthaltende, nicht aufschwimmende, abriebfeste, wasseraufnahmefähige, hochgefüllte Polyurethan(harnstoff)e mit einem Gehalt an Füllstoffen von mehr als 15 Gew.-%, bevorzugt $\geq$ 20 Gew.-%, besonders bevorzugt $\geq$ 40 Gew.-%, und einer Obergrenze von 95 Gew.-%, bevorzugt $\leq$ 90 Gew.-%, besonders bevorzugt $\leq$ 85 Gew.-%, bezogen auf den wasserfreien Gehalt an füllstoffhaltigen Polyurethanen,

wobei als Füllstoffe feinteilige, fossile Lignocellulosen oder deren Folgeprodukte enthaltende Naturstoffe wie Torf, Braunkohle, Steinkohle, Koks oder Holzkohle, bevorzugt Schwarztorf und/oder Braunkohle, am günstigsten insbesondere Braunkohlenstaub; und/oder Aktivkohle und/oder Korkpulver, und/oder feinteilige, über 100°C schmelzende organische Destillationsrückstände, insbesondere Destillationsrückstände der Toluylendiisocyanat-Destillation, und/oder anorganische feinteilige Füllstoffe, insbesondere Eisenoxide, pyrogene Kieselsäuren, Quarz, Bimsstein, Seesand, Kieselsole, Wasserglas, Aluminiumoxide oder Aluminiumsilikate, Bentonite oder Kreide sowie Gips,

und/oder homogene oder zellige Kunststoffteilchen auf Polymerisat-, Polykondensations- und/oder Polyadditionsbasis, insbesondere Polyurethan-Weich- oder -Hartschaumstoff-Teilchen, benutzt werden

und hydrophile und/oder hydrophobe Polyurethan(harnstoff)e, welche vorzugsweise kationische Gruppen oder kationische Gruppen bildende Gruppen, insbesondere in Mengen von 10 bis 3000 Milliäquivalenten, besonders bevorzugt 50 bis 1000 Milliäquivalenten pro kg Polyurethan(harnstoff), im Matrix-Feststoff enthalten, als die Füllstoffe bindende Matrix dienen und mit einer, durch hydrophile Polyurethanharnstoffe und/oder durch hydrophile Füllstoffe bedingte Wasseraufnahmefähigkeit von mehr als 33 Gew.-% Wasser, bevorzugt 50 bis 97 Gew.-% Wasser, bezogen auf wassergequollenen, füllstoffhaltigen Polyurethanharnstoff-Träger,

als Träger für Biomassen in der Klärflüssigkeit in einer Menge von mindestens 0,5 g pro Liter Klärflüssigkeit, einsetzt.

Der Füllstoff ist ein wesentlicher Bestandteil der im Klärwasser als hydrophile (wasseraufnahmefähige) Träger suspendierten Polyurethan(harnstoff)massen, wobei durch eine Wechselwirkung zwischen dem Füllstoff und der Polyurethan(harnstoff)masse der unerwartet hohe Abbaueffekt bei der erfindungsgemäßen Verwendung der beanspruchten Träger eintritt. Entweder durch die Polyurethane (z.B. in Form hydrophiler PU-Massen) und/oder durch hydrophile Füllstoffe (z.B. Braunkohle oder Schwarztorf) muß eine solche Hydrophilie in die Träger eingebracht werden, daß sie die genannte Wasseraufnahmefähigkeit besitzen.

Die Füllstoffe bestehen in einer bevorzugten Ausführungsform aus fossilen Lignozellulosen oder deren

Folgeprodukte enthaltenden Naturstoffen, wie Torf und/oder Braunkohle, oder auch Steinkohle oder feingemahlenem Koks oder Holzkohle. Steinkohle, Koks oder Holzkohle wird allerdings bevorzugt nur als Mischkomponente zu weiteren Füllstoffen verwendet. Bevorzugt wegen der "hydrophilen", wasserabsorbierenden Eigenschaften werden Torf (insbesondere als vorgetrocknetes, zerkleinertes Naturprodukt, mit vorzugsweise einem Restwassergehalt unter 20 Gew.-%, bevorzugt unter 15 Gew.-%, besonders bevorzugt unter 10 Gew.-%, kann jedoch auch ganz auf Null % Werte rückgetrocknet werden, in verschiedenen Alterungszuständen, wie z.B. Weiß- oder (bevorzugt) Schwarztorf) und insbesondere Braunkohle. Braunkohle, beispielsweise mit ungefähren Prozentgehalten von etwa 68 % C, 5,3 % H, 25,7 % 0 und 1.0 % N, bezogen auf Trockensubstanz, stellt einen ganz besonders vorteilhaften, hydrophilen Füllstoff dar und ist als Füllstoff entsprechend der Erfindung ganz besonders bevorzugt, zumindest als Füllstoff neben anderen Füllstoffen, insbesondere neben PU-Schaumstoffteilchen als eingebaute Füllstoffe. Torf und Braunkohle vermögen hohe Mengen an Wasser hydrophil zu binden, ohne das sich diese Materialien naß anfühlen - z.B. $\geq$ 150 % Wasser, bezogen auf Braunkohle- oder Torf-Trockensubstanz.

Als Füllstoffe können aber auch Aktivkohlen eingesetzt werden, ferner feinteilige, über 100° C schmelzende organische Destillationsrückstände, insbesondere Destillationsrückstände der Toluylendiisocyanat-Destillation, welche beispielsweise durch Eintragen der Destillationsrückstände in Wasser unter Denaturierung und anschließender Granulierung erhalten werden. Diese TDI-Rückstände können gegebenenfalls auch noch nachträglich durch Behandlung mit reaktive Wasserstoffe tragende Verbindungen wie Ammoniak, Polyole oder Polyaminoverbindungen modifiziert sein. In vielen Fällen tragen sie noch geringe Mengen inkludierter NCO-Gruppen oder reaktive Abwandlungsprodukte von Isocyanaten, welche mit den Biomassen oder abzubauenden Verbindungen reagieren können. Derartige Destillationsrückstände werden beispielsweise in den DE-A 28 46 814, 28 46 809, 28 46 815 beschrieben.

Weiterhin geeignete Destillationsrückstände sind aber auch hochschmelzende Destillationsrückstände von Aminen, Phenolen, Caprolactam u.ä.

Weiterhin sind als bevorzugte Füllstoffe homogene oder zellige Kunststoffe verschiedener Art, insbesondere aber Polyurethan-Schaumstoffteilchen oder Polyurethan(halb)hartschaumstoff-Granulate geeignet. Diese Schaumstoffe werden in die Polyurethanmatrix derart eingebettet oder umhüllt, daß zumindest ein Teil oder in anderen Fällen nahezu alle Hohlräume durch die bindende Polyurethan-Matrix ausgefüllt wird und somit eine wesentliche Verdichtung des Materials eintritt, wodurch diese Träger nicht mehr aufschwimmen.

Ökonomisch besonders interessant ist ferner die Verwendung von Kunststoff-Fehlchargen oder Kunststoff-Abfällen als Füllstoffe. Homogene Kunststoffe werden unter 3 mm oder feiner zerkleinert eingesetzt, zellige Kunststoffe dagegen, insbesondere die in riesigen Mengen zwangsweise anfallenden Polyurethan-Weichschaumstoffabfälle, können in Form eines preisgünstig erhältlichen, unregelmäßigen, stückigen Granulats mit Kantenlängen von einem mm bis zu mehreren cm, auch als Mischung verschiedener Schaumstoffraumgewichte, als Füllstoff unter Bindung mit den Polyurethan(harnstoff)massen zur Herstellung der Träger verwendet werden.

Besonders bevorzugt werden Träger, welche Kombinationen von fossilen Lignocellulosen, insbesondere Braunkohlenstaub und/oder Schwarztorf und PU-Schaumstoffteilchen (bevorzugt PU-Weich-Schaum-(Abfall)-Teilchen) enthalten.

Die anorganischen Füllstoffe wie Quarz, Seesand, pyrogene Kieselsäure (Aerosil), Silikate, Alumosilikate, Bentonite, Aluminiumoxid, Bimsstein, Kieselsole, Wasserglas aber auch Calciumoxid, Calciumcarbonat, Schwerspat, Gips, insbesondere aber auch feinteilige (Eisen-II- und/oder Eisen-III-oxide in Pigmentform oder als Magnetit-Schlämme) werden bevorzugt nur in Anteilen neben den fossilen und/oder Schaumstoff-Füllstoffen zugesetzt, um eine gewisse Regulierung des spezifischen Gewichts der Träger zu gestatten, so daß diese in der zu klärenden Flüssigkeit absinken oder schweben, jedoch keinesfalls aufschwimmen. Besonders feinteilige anorganische Füllstoffe (z.B. mit Primärteilchen unter 10 µm und hoher Oberfläche, z.B. Aerosil oder Eisenoxide) begünstigen bei Anwesenheit in den erfindungsgemäß zu verwendenden Trägern die Sauerstoffübertragung auf die Klärschlammbakterien und somit bessere Abbauleistungen bzw. Abbauwirkungen, wobei Metalloxide offenbar besonders günstige, spezifische Sauerstoffübertragungsfunktionen bewirken und somit erfindungsgemäß günstige Abbauwirkungen ergeben. Als modifizierende Füllstoffzusätze können auch Fasern (z.B. anorganische Fasern) wie Glasfasern oder natürliche bzw. synthetische Fasern (z.B. Baumwollstaub) mitverwendet werden.

Die Korngröße der Füllstoffe liegt im allgemeinen zwischen 0,5 bis 1000 µm, bevorzugt unter 300 µm, besonders bevorzugt unter 100 µm, wobei insbesondere für Aktivkohle und anorganische Bestandteile sowie beim Steinkohlenpulver bzw. Holzkohlenpulver geringere Korngrößen bevorzugt werden als etwa im Fall von Torf oder Braunkohlenstaub, wobei Torf und Braunkohle gegebenenfalls faserige Anteile mit enthalten können. Für als Füllstoffe zu verwendende Schaumstoffteile gilt die Größenbeschränkung der Korngröße nicht.

Hier können gegebenenfalls einige mm (z.B. 1 bis 30, vorzugsweise 2 bis 10 mm) große Schaumstoffstücke in der Polyurethan(harnstoff)masse eingebettet werden oder sogar etwa 2 - 10 mm dicke PU-Schaumstoff-Folien.

Der gesamte Füllstoffanteil soll über 15 Gew.-%, bevorzugt > 20 Gew.-%, besonders bevorzugt >40 Gew.-% betragen, wobei eine Obergrenze von <95 Gew.-%, bevorzugt <85 Gew.-% und besonders bevorzugt <80 Gew.-% eingehalten wird. Die Anteile Füllstoffe werden in Gew.-%, bezogen auf die Trockensubstanz der gefüllten Polyurethan(harnstoff)massen berechnet. Die Obergrenze wird im allgemeinen vom Zusammenhalt und der Abriebbeständigkeit der hochgefüllten Polyurethanmassen bestimmt. Es ist sogar in Einzelfällen möglich, den Füllstoffanteil noch weiter zu steigern, z.B. auf 97 %, wenn man die biologische Klärung in einer

Festbettanordnung durchführt.

Die Füllstoffe werden in die Polyurethan(harnstoff)-Matrix in verschiedenen, in der Beschreibung noch näher angegebenen Ausführungsformen eingearbeitet. So können sie einer der Ausgangsstoffe oder der vorpolymeren Produkte, vorzugsweise den NCO-Prepolymeren oder den OH-funktionellen, höhermolekularen, gegebenenfalls mit Polyisocyanaten vorverlängerten Polyolen, untergemischt werden und dann kann mit dieser Mischung die polyurethanbildende Reaktion durchgeführt werden. Bevorzugt werden jedoch die Füllstoffe zunächst mit Wasser benetzt oder in Wasser dispergiert und mittels Zugabe der NCO-Prepolymeren von diesen gebunden, wobei jedoch gleichzeitig der Polyurethan(harnstoff)-Aufbau (insbesondere mittels Wasser als Kettenverlängerungsmittel) erfolgt. Bei Verwendung von ionischen NCO-Prepolymeren ist eine kurzzeitige Vermischung mit einem Teil der vorgesehenen Wassermenge, beispielsweise in einem Durchflußmischer oder statischen Mischer zur Herstellung einer sehr feinteiligen Emulsion von Vorteil, die eine sofortige Benetzung auch stärker vorgetrockneter, fossiler Zellulosen mit der Gesamtmenge Wasser möglich macht, sodaß die Isocyanatreaktion in optimaler Verteilung ablaufen kann.

Die Herstellung der erfindungsgemäß verwendeten, hochgefüllten, in Wasser stark quellfähigen Polyurethan(harnstoff)massen als Träger ist zwar nicht Erfindungsgegenstand der vorliegenden Anmeldung (die Herstellung Schaumstoff-haltiger bzw. Braunkohle-haltiger Träger ist Gegenstand weiterer, gleichzeitig eingereichter Anmeldungen), wird aber vor allem in bevorzugten Zusammensetzungen und bevorzugtem strukturellen Aufbau zur Erläuterung nachfolgend beschrieben. Dabei sind mehrere Faktoren und ihre Zusammenwirkung gleichzeitig von großer Bedeutung. Das bezieht sich sowohl auf die Ausgangskomponenten für die Polyurethanbildung, ihre Mengenrelation, als auch auf die Herstellungsmethoden, sowie auch die Art der Füllstoffe, wobei alle diese Aspekte sorgfältig aufeinander abgestimmt werden müssen, damit das Ziel der Herstellung von Polyurethan(harnstoff)-Trägermassen der genannten Art, welche hohe Mengen an Füllstoffen enthalten, jedoch stark hydrophile Eigenschaften im Endprodukt aufweisen, erreicht wird, wobei diese hydrophilen Eigenschaften durch den hydrophilen Polyurethan(harnstoff) und/oder durch hydrophile Füllstoffe eingebracht werden können. Die Träger sollen einen Wasseraufnahmefähigkeitswert (WAF) von mindestens 33 Gew.-% Wasser, bevorzugt 50 bis 97 Gew.-% Wasser, besonders bevorzugt 75 bis 95 Gew.-% Wasser, bezogen auf wassergequollenen, füllstoffhaltigen Polyurethan(harnstoff)-Träger in Suspension (s. Meßvorschrift) aufweisen. Dies bedeutet beispielsweise, daß bei einer Wasseraufnahmefähigkeit von 33 % die halbe Gewichtsmenge Wasser, bezogen auf Gewichtsmenge füllstoffhaltiger Trägermassen-Trockensubstanz aufgenommen wird, oder daß bei einer Wasseraufnahmefähigkeit von 80 % die vierfache Menge Wasser eingesetzt wird oder bei einer Wasseraufnahmefähigkeit von 95 % die 19-fache Menge Wasser der füllstoffhaltigen PU-Trägermassen-Trockensubstanz größtenteils aufgesaugt wird oder sich zwischen den Trägerteilchen befindet.

Bevorzugt sind hydrophile Polyurethan(harnstoffe) als bindende Matrix für die Füllstoffe, wobei sowohl die verwendeten höhermolekularen Polyole als auch die Kettenverlängerungsmittel als auch die Polyisocyanate (letztere technisch allerdings in weniger bevorzugter Form) hydrophile Eigenschaften aufweisen können.

Als höhermolekulare Polyole mit Molekulargewichten vorzugsweise oberhalb 400 werden höherwertige Polyhydroxylverbindungen eingesetzt, besonders etwa 2,2 bis 3,5-wertige Polyhydroxy-Polyether oder deren Mischungen mit niedermolekularen Polyolen. Polyether mit Molekulargewichten von etwa 400 bis 6000 sind vor den prinzipiell gleichfalls verwertbaren Polyestern, Polycarbonaten oder Polylactonen sehr bevorzugt, da sie auch im Langzeitverhalten wesentlich hydrolysenstabiler als die Estergruppen aufweisenden Polyhydroxylverbindungen sind.

Für den Aufbau von hydrophilen Polyurethanen sind insbesondere solche Polyoxyalkylenether geeignet, welche eine größere Zahl, z.B. mehr als 20 Gew.-%, oder mehr als 30 Gew.-% und besonders mehr als 40 Gew.-%, jedoch weniger als 85 Gew.-% an Oxyethylen-Sequenzen enthalten. Die Oxyethylengruppen können endständig, statistisch verteilt oder bevorzugt segmentartig, oder sowohl endständige als auch segmentartig (im Inneren), in den polyethern eingebaut sein. Die Polyoxyalkylenether können jedoch auch geringe Mengen an z.B. cycloaliphatischen oder aromatischen Gruppierungen enthalten, beispielsweise wenn sie auf cycloaliphatischen Polyolen oder aromatischen Verbindungen z.B. Dihydroxycyclohexanen oder Hydrochinonbishydroxyethylethern oder 4,4'-Dihydroxy-diphenyl-dimethylmethan gestartet sind. Auch aus höherfunktionellen Zuckeralkoholen oder Zuckern können durch Alkoxylierung geeignete Polyole aufgebaut werden.

In modifizierenden Mengen können auch Kettenverlängerungsmittel mit Molekulargewichten bis 399, vorzugsweise bis 254, mitverwendet werden, vorzugsweise Di- und/oder Polyole oder Aminoalkohole, z.B. Ethylenglykol, 1,2-Propylenglykol, 1,4-Butandiol, 2,3-Butandiol, Neopentylglykol, 2-Methyl-propandiol-1,3, Hexandiol-1,6, Dodecandiol-1,12, besonders die relativ hydrophilen aber auch mit Molekulargewichten bis 399, aber auch Di-, Tri- und Tetrapropylenglykoldiole oder Di-, Tri- und Tetraoxymethylendiole. Als Aminoalkohole sind beispielsweise einsetzbar Bis-hydroxyethyl-amin, Bis-2-hydroxypropylamin, Aminozucker oder 2-Aminopropandiol-1,3.

Polyamine werden als Kettenverlängerungsmittel vorzugsweise nur neben anderen niedermolekularen Polyolen oder Wasser mitverwendet. Bevorzugtes Kettenverlängerungsmittel ist Wasser, was nicht nur als Kettenverlängerungsmittel, sondern zugleich als Quellmittel für die hydrophil aufgebauten Träger wirkt.

Als Polyisocyanate werden bevorzugt die di- und polyfunktionellen Polyisocyanate eingesetzt, z.B. Hexandiisocyanat, Dicyclohexylmethandiisocyanat, Isophorondiisocyanat, bevorzugt jedoch aromatische Di- und Polyisocyanate, wie die Toluylendiisocyanat-Isomeren, Diphenyl-methan-4,4'- und/oder 2,4'- und/oder 2,2'-

Isomeren, sowie gegebenenfalls die höhermolekularen Polyphenylpolymethylenpolyisocyanate, wie sie durch Phosgenierung von rohen Formaldehyd-/Anilin-Kondensationsprodukten (Polyamingemischen) entstehen und als gegebenenfalls undestillierte Sumpfprodukte verwendet werden. Sulfongruppenhaltige Polyisocyanate sind gleichfalls verwertbar.

Als Katalysatoren können die üblichen Polyurethankatalysatoren, wie tert. Amine, Metallkatalysatoren oder Zinnkatalysatoren eingesetzt werden, was in vielen Fällen jedoch nicht zwingend erforderlich ist.

Die hydrophilen Polyurethane liegen bei Verwendung hydrophiler Polyole zumeist in Form einer mehr oder minder gelartigen, gequollenen, gegebenenfalls schaumgelartigen Form vor, die sich feucht anfühlen. Sie können prinzipiell nach allen Verfahren und aus Ausgangskomponenten hergestellt werden, wie sie beispielsweise in den DE-A 23 47 299, DE-C 25 21 277, DE-C 25 21 265, DE-A 31 03 500, DE-A 31 03 564 und DE-A 31 51 925 beschrieben sind.

Die aus hydrophoben Polyolen und Polyisocyanaten aufgebauten, hochgefüllten, an sich hydrophoben Polyurethan(harnstoff)massen sind insbesondere bei Verwendung von Torf oder Braunkohle überraschenderweise ebenfalls stark hydrophil in Bezug auf ihr Wasseraufnahmevermögen (WAF-Wert), fühlen sich aber im Gegensatz zu den obengenannten hydrophilen Gelen weitgehend oder ganz trocken an, sind auch besonders leicht herstellbar und für den jahrelangen Betrieb in Kläranlagen besonders widerstandsfähig und neigen bedeutend weniger zur unerwünschten Schaumbildung auf der Oberfläche der Klärbecken. Sie sind daher stark bevorzugt, insbesondere mit Torf und/oder Braunkohle als Füllstoffe, gegebenenfalls zusätzlich mit PU-Schaumstoff-Füllstoffen, sowie in kationisch modifizierten PU-Massen.

Es ist besonders bevorzugt, beim Aufbau der Polyurethan(harnstoffe) hydrophile und/oder hydrophobe Ausgangskomponenten mit kationischen Gruppen oder kationische Gruppen bildenden Gruppen mitzuverwenden. Als kationische Gruppen können im Prinzip quarternäre oder salzartige Ammoniumgruppen, aber auch Sulfonium- oder Phosphoniumgruppierungen eingesetzt werden. Bevorzugt ist die Verwendung von quartären Ammoniumgruppen oder tertiären Aminogruppen aufweisenden Verbindungen, welche nachträglich in die Ammonium(salz)-Form überführt werden. Die Menge der einzubauenden kationischen Gruppen bzw. Kationen bildenden Gruppen ist 10 bis 3000 Milliäquivalente an Kationen bzw. Kationen bildenden Verbindungen auf 1000δ

Feststoff-Polyurethan/Matrix. In den Fällen, wo man bereits quaternierte oder in Salzform überführte Verbindungen einsetzt, beträgt die Obergrenze im allgemeinen 1000 Milliäquivalente pro 1000 g Feststoff PU, da andernfalls während der Reaktion eine zu hohe Viskosität sich störend bemerkbar macht. Bevorzugt werden 30 bis 750 Milliäquivalente kationischer oder Kationen bildender Gruppierungen, besonders bevorzugt 50 bis 750 Milliäquivalente kationischer oder Kationen bildender Gruppen auf 1000 Gramm Feststoff-Polyurethan eingebaut. Als kationenbildende Verbindungen werden bevorzugt tertiäre Aminogruppen-enthaltende Di- oder Polyole verwendet, z.B. N-Methyldi-(ethanol)amin oder -(propanol)amin, N,N-Di-methylaminomethyl-propandiol-1,3, Bis-hydroxyethylpiperazin, aber auch höherfunktionelle Verbindungen, wie z.B. Triethanolamin oder höhermolekulare Verbindungen wie z.B. Polyoxyalkylenether, welche auf tert. Amin-Polyole z.B. der genannten Art, gestartet sind. Weitere derartige einbaufähige tert. Aminverbindungen werden beispielsweise in der DE-C 3 461 102 oder der österreichischen Patentschrift 257 170 aufgeführt. Es können jedoch auch quarternierte Verbindungen wie z.B. Tetramethylammoniumchlorid oder Tetramethylammoniummethylsulfonat als Einbaukomponenten verwendet werden. Bisweilen ist es auch ausreichend, Verbindungen, welche tertiäre Amin-Endgruppen ergeben, in die Verbindungen einzubauen, z.B. N,N-Dimethylaminoethanol.

Bei Verwendung solcher kationisch modifizierter Polyurethane in Braunkohle und/oder Torf enthaltenden Polyurethanträgern werden überraschenderweise die sonst wasserlöslichen Komponenten von Braunkohle oder Torf, nämlich die Huminsäuren und ähnliche saure, lösliche Verbindungen, überraschenderweise quantitativ fixiert. Somit wird auch für die Verwendung großer Mengen an Torf und/oder Braunkohle als Füllmittel in den hydrophilen Trägern bei Einbringen in Wasser eine farblose, völlig klare wäßrige Phase erhalten. Bisher stand der Verwendung von Torf oder Braunkohle in Kläranlagen der gravierende Nachteil dieser wohlfeilen Naturstoffe im Wege, daß eine Braunfärbung des Wassers durch Herauslösen beträchtlicher Anteile einer ganzen Reihe von in Wasser bei pH 5 bis 9 direkt löslicher oder kolloidal in Lösung gehender Bestandteile, beispielsweise Huminsäuren oder deren Vorstufen, eintrat. Vielfach entsteht bei einfacher Verwendung von Braunkohle oder Torf als Trägersubstanz in Kläranlagen nach dem Stand der Technik dagegen eine starke Trübung im Wasser und auch durch die gelösten Bestandteile ein erhöhter chemischer Sauerstoffbedarf (CSB-Wert).

Zur Herstellung von kationischen oder Kationen bildenden Polyurethan(harnstoff)massen ist am besten ein Weg über Isocyanatprepolymere geeignet, welche kationische Gruppen eingebaut enthalten oder eine zur Kationenbildung befähigte Gruppierung wie tertiär gebundenen Stickstoff, besitzen. Zur Salzbildung können auch phosphorsaure Salze herangezogen werden, welche z. B. notwendige Wachstumskomponenten für die Klärschlammbakterien darstellen. In vielen Fällen reicht jedoch auch bereits die Salzbildung mit den Huminsäuren oder sonstigen sauren Bestandteilen aus den Klärschlämmen aus, so daß die Kationenbildung erst in den Klärbecken erfolgen kann.

Es können aber im Fall der Verwendung von Braunkohle und/oder Torf als Füllstoffe enthaltenden, bevorzugt kationisch modifizierten Polyurethanmassen auch zusätzlich beispielsweise kationische, wäßrige Polyurethan- oder Polyacrylat- oder Polyamid-Dispersionen zugesetzt oder mitverwendet werden. In diesen Fällen der zugesetzten kationischen Dispersionen ist die vollständige Aufnahme in hochgefüllten Polyurethan(harnstoff)massen zumeist in nur relativ kleinen Mengen möglich - bei zu hohen Additivmengen

wird sonst ein Teil davon im Wasser wieder ausgeschwemmt. Möglich ist die nachträgliche Applikation von wäßrigen, kationischen Dispersionen auf das nichtionische, mit Braunkohle und/oder Torf (und gegebenenfalls PU-Schaumstoffen) hochgefüllte Polyurethanharnstoff-Trägermaterial, ist jedoch wenig bevorzugt, weil es in dieser nicht so stark fixierten Form oft als Flockungsmittel für Klärschlamm wirkt. Relativ vorteilhafter ist dagegen die Zumischung dieser kationenaktiven Polymeradditive durch Zumischung vor den Isocyanatreaktionen in wäßriger Phase, z.B. der Umsetzung des NCO-Prepolymers mit Wasser zum Polyurethan(harnstoff).

Neben den Kationengruppen können jedoch bis zur, oder besser unterhalb der Ionenäquivalenz, auch Anionengruppen (z.B. Sulfonatgruppen) im Polymeren oder als (polymere) Zusätze unter Ausbildung von Ampholytsystemen anwesend sein. Ein Überschuß von Anionen über die Kationengruppen ist bei Verwendung von Braunkohle oder Torf auf alle Fälle zu vermeiden.

Der Zusatz von kationischen (und gegebenenfalls auch anionischen) Polymeren zu den Polyurethan-Trägermassen ist nicht bevorzugt; eindeutige technische Vorzüge weist dagegen die aus diesem Grunde bevorzugte Ausführungsform der Verwendung von im Polyurethanaufbau selbst kationisch eingestellter Polyurethanharnstoffmassen auf.

Die Kationengruppen in den hochgefüllten Polyurethan(harnstoff)massen haben nicht nur auf die Bindung der genannten fossilen Naturstoffe, insbesondere Braunkohle und/oder Torf, einen entscheidend günstigen Einfluß, sondern auch auf die Aktivität der Belebtschlammbakterien und überraschenderweise auch auf die Abriebbeständigkeit von Füllstoffen. Außerdem sorgen die Ionenladungen für eine feindisperse Verteilung oder sogar Lösung der Isocyanatverbindungen in den in sehr hohen Überschüssen angewendeten Mengen an Wasser (eine Art Emulgatorwirkung), so daß eine unerwünschte Koagulation der Polyurethane für sich selbst nicht auftritt, sondern eine sehr gleichmäßige Umhüllung der Füllstoffteilchen erfolgt.

Überraschenderweise hat sich auch gezeigt, daß anorganische Naturstoffe, wie z.B. Quarz, Seesand oder Bimssteinpulver durch die kationischen Polyurethane erheblich abriebfester gebunden werden und daß sich während der Polyurethanbildung keine Sedimentationserscheinungen der anorganischen Füllstoffe ergeben. Diese Zugabe von anorganischen Füllstoffen wird zumeist zur Regulierung des spezifischen Gewichtes der Trägermassen durchgeführt, um das spezifische Gewicht so einzustellen, daß kein Aufschwimmen der Träger während der Klärvorgänge eintritt. Extrem feinteilige anorganische Füllstoffe (0,1 bis 10 µm) erhöhen zusätzlich die spezifische Oberfläche der Trägermassen. Eisenoxide vermögen die Sauerstoffübertragung auf die Bakterien günstig zu beeinflussen. Die anorganischen Füllstoffe werden im allgemeinen jedoch nur in modifizierenden Mengen neben den anderen Füllstoffen, vorzugsweise neben Braunkohle und/oder Torf und/oder PU-Schaumstoffen, mitverwendet.

Ein bevorzugter Weg zur Herstellung der hydrophilen Trägermassen auf Polyurethan(harnstoff)Basis liegt in der Herstellung über NCO-Prepolymere, welche aus hydrophoben und/oder hydrophilen Polyhydroxylverbindungen, letztere vorzugsweise aus oxyethylengruppen-haltigen Polyethern, gegebenenfalls Kettenverlängerungsmitteln und überschüssigen Polyisocyanaten hergestellt werden. Durch Reaktion mit überschüssigen Mengen an Wasser tritt Reaktion zum Polyurethan(harnstoff) ein. Das Wasser kann gegebenenfalls geringere Mengen an Di- oder Polyaminen enthalten. Die Suspendierung der Füllstoffe erfolgt bei der diskontinuierlichen Herstellung vorzugsweise zuerst in der überschüssigen wäßrigen Phase oder durch Benetzung der Füllstoffe mit dem vorgesehenen Überschuß an Wasser; danach wird das NCO-Prepolymere zudosiert.

In geeigneten, kontinuierlich arbeitenden Mischaggregaten, wie einem Doppelpaddel-Schneckentrog, können alle Komponenten praktisch gleichzeitig oder nur wenige Sekunden nacheinander zugegeben und intensiv vermischt werden, wobei die Isocyanatreaktionen sofort beginnen. Auf die Reaktionsgeschwindigkeit kann man in bekannter Weise mit Hilfe von Katalysatoren und/oder Anwendung erhöhter Temperaturen Einfluß nehmen. Zum Start der Isocyanatreaktion werden Temperaturen zwischen 10 bis 90°C, bevorzugt 20 bis 70°C gewählt. In vielen Fällen sind die üblichen Raumtemperaturen gut geeignet. Nach intensiver Endmischung aller Reaktionskomponenten kann die Reaktionstemperatur bis auf etwa 90°C gesteigert werden.

Wasser ist nicht nur, wie bereits erwähnt, als Reaktionspartner für die Polyisocyanatverbindungen erforderlich, sondern es dient auch als Dispersionsmittel in größeren Überschußmengen, gleichgültig, ob hydrophile oder hydrophobe Isocyanatverbindungen eingesetzt werden. Besonders wichtig ist die resultierende Hydrophilie, d.h. die Wasseraufnahmefähigkeit und das Wasserrückhaltevermögen des Endproduktes, d.h. des hochgefüllten, Polyurethan(harnstoff)-Trägers, die Abriebfestigkeit dieses hydrophilen (wasseraufnahmefähigen) Trägers, eine möglichst jahrelange Beständigkeit und Unlöslichkeit im Klärwasser und eine leichte Sinktendenz oder mindestens Schwebefähigkeit im Klärschlammbecken, d.h. eine nicht aufschwimmende Charakteristik der Teilchen.

Eine maximale Hydrophilie ist entweder dadurch zu erreichen, daß alle in dominierender Menge verwendeten Komponenten stark hydrophil sind, z.B. Polyurethan(harnstoff)-Vorprodukte wie Polyole oder Kettenverlängerungsmittel (ergibt hydrophile PU-Gele als Matrix) oder bevorzugt auch der (insbesondere in etwa gleicher oder besser größerer Menge als die Polyurethane verwendete) hydrophile Füllstoff. Eine zu stark hydrophile PU-Matrix ist jedoch hinsichtlich der Langzeitlagerung im Wasser meistens nicht ausreichend beständig und im Wirbelbett nicht abriebfest. Als hydrophile PU-Ausgangskomponenten werden vorzugsweise Polyetherpolyole mit $\geq$ 20, möglicherweise $\geq$ 30, oder auch $\geq$ 40 Gew.-% Oxyethylen-Gruppen eingesetzt.

Die Wasseraufnahmefähigkeit der erfindungsgemäß zu verwendenden Träger ist in unterschiedlichen Ausführungsformen der Herstellung bzw. Zusammensetzung zu erzielen, doch gilt als Regel zum Handeln, daß

man hydrophile Polyurethane sowohl mit hydrophilen wie auch hydrophoben Füllstoffen kombinieren kann, während hydrophobe Polyurethane als Matrix im allgemeinen mit hydrophilen Füllstoffen, wie z.B. Torf oder Braunkohle kombiniert werden müssen, um die notwendige Wasseraufnahmefähigkeit der Träger zu erreichen. Auch durch Einbau von Polyurethan(Weich)Schaumstoffen wird im allgemeinen die Wasseraufnahmefähigkeit erhöht.

Auch die bei der Reaktion mit den NCO-Prepolymeren und Füllstoffen vorhandene Wassermenge ist von großer Bedeutung:

Bei Verwendung von relativ geringen Mengen Wasserüberschuß, beispielsweise 20 Teile Wasser auf 80 Teile NCO-prepolymer plus Füllstoffe entsteht mit z.B. hydrophoben NCO-Prepolymeren ein feinpulvriges oder krümeliges, nicht ausreichend hydrophiles und somit ungeeignetes Produkt mit hoher Ausschwemmrate; erst mit einer deutlich höheren Wassermenge bindet das NCO-Prepolymer die Füllstoffe zu einem abriebfesten, wasseraufnahmefähigen Träger mit den erfindungsgemäß erforderlichen Eigenschaften.

Da der erforderliche Wassergehalt meistens zwischen 33 Gew.-% und 97 Gew.-%, vorzugsweise 50 Gew.-% und 95 Gew.-%, bezogen auf wassergequollenes, füllstoffhaltiges Polyurethan, in weiten Grenzen schwanken kann, unterzieht man etwa 30 bis 300 g große Vorproben der in Betracht gezogenen, hochgefüllten Polyurethan(harnstoff)-Träger, die man durch systematische Variation der Art und Menge der Isocyanatkomponenten und der Füllstoffe in Anwesenheit variabler, aber immer großer Überschußmengen Wasser in kleinen Vorversuchen hergestellt hat, einem Test in mit Wasser gefüllten Säulen, z.B. mit einem Durchmesser von 10 bis 20 cm, durch die man von unten durch eine Fritte oder eine feingelochte Siebplatte Luft strömen läßt. Innerhalb von 24 Stunden läßt sich so mit der vollständig gequollenen Trägermasse der Abrieb die Sinktendenz die Farbe und die Transparenz der wäßrigen Phase leicht ermitteln. Die Anwesenheit und richtige Dosierung von Überschußmengen Wasser ist, wie dargelegt, bei der Herstellung des Trägermaterials für die vorgesehene Verwendung der gefüllten Polyurethan(harnstoffe) als Bioaktivatoren in biologisch arbeitenden Kläranlagen von großer Bedeutung.

Nach dem Test ist es möglich, aus der Fülle der vielen, in der Polyurethanchemie bekannten und üblichen Reaktionskomponenten und der Füllstoffe, unter Beachtung ihrer charakteristischen Einflüsse, die richtigen Reaktionspartner und Mengen auszuwählen und somit die erfindungsgemäß zu verwendenden gefüllten Polyurethan(harnstoff)-Träger der gekennzeichneten Eigenschaften diskontinuierlich oder kontinuierlich herzustellen, wobei der Herstellungsmethode über ein Polyisocyanat-Prepolymeres, wenigstens zumindest 30 % eines NCO-Prepolymeren, im Gegensatz zur Herstellung aus bekannten niedermolekularen Polyisocyanaten und einer höhermolekularen und gegebenenfalls niedermolekularen, mindestens zweiwertigen wasserstoffaktiven Verbindungen, der Vorzug gegeben wird.

Wie bereits erwähnt, können als Füllstoffe auch grobstückigere schaumstoffartige Kunststoffe, besonders Polyurethan-Schaumstoffe, mit Polyurethanen als Matrix zu geeigneten Trägern gebunden werden.

Nach dem Stand der Technik ist die Verwendung von Weichschaumstoffen auf Polyurethanbasis als Träger in biologischen Reinigungsverfahren von Abwässern beschrieben. Es hat sich jedoch gezeigt, daß Leichtschaumstoffe üblicher Raumgewichte von 15 bis 35 kg/m$^3$, wie sie als Schaumstoffabfall im Handel sind, keinesfalls alleine als Trägermaterialien in Klärschlammbecken mit Erfolg benutzt werden können. Derartige Schaumstoffe schwimmen immer auf, führen zu Verstopfungen und sonstigen widrigen Charakteristiken ihres Verhaltens in Kläranlagen und werden deshalb nicht mehr benutzt. Polyurethan-Weichschaumstoffe mit relativ hohen Gewichten von ca. 90 kg/m$^3$ sind zwar etwas günstiger, jedoch auch noch nach Monaten (siehe Vergleichsbeispiele) zu einem erheblichen Teil an der Oberfläche der Klärbecken schwimmend. Auch führen sie je nach Schichtdicke der Schaumstoffe zu Verstopfungen des Ablaufs oder werden sogar mit dem Ablauf ausgetragen. Derartig aufschwimmende Schaumstoffe sind für die Biomasse weitgehend unwirksam und ergeben vielfach wohl unüberwindliche technische Schwierigkeiten. Auch die Zugabe von Aktivkohle zu den Schaumstoffen bringen keine Vorteile, selbst dann nicht, wenn diese (siehe Vergleichsbeispiel) vorher in den Schaumstoff eingequetscht werden.

Erfindungsgemäß werden jedoch in einer bevorzugten Ausführungsform solche Träger für Biomassen verwendet, welche Polyurethan-Schaumstoffteilchen (Raumgewichte etwa 10-110 kg/m$^3$) innerhalb der Polyurethan-Matrix enthalten. Bevorzugt verwendet werden Polyurethan-Weichschaumstoffe oder halbharte Polyurethan-Schaumstoffe, in stückiger Form, während harte, spröde Polyurethanteilchen, vorzugsweise in pulverisierter Form eingesetzt werden, weil sie in stückiger Form vielfach ungünstigeres Verhalten zeigen und gegebenenfalls auch trotz Bindung in der Polyurethan-Matrix - abhängig von deren Zusammensetzung - zerrieben werden und somit oft nicht ausreichend abriebfest sind. Überraschenderweise sind jedoch selbst Abfall Weichschaumstoffflocken mit einem Gewicht unter 23 kg/m$^3$ in der gebundenen Form mit Polyurethanen hervorragend geeignete Träger für aufwachsende Biomassen. Die Hohlräume der Schaumstoffe werden bei der Bindung mit der Polyurethan-Matrix praktisch ganz oder zumindest teilweise gefüllt und somit steigt das Raumgewicht und die mechanische Festigkeit hinreichend stark an, damit die Schaumstoff-Flocken nicht mehr aufschwimmen und gegenüber mechanischen Einflüssen beständig sind.

Es entspricht einer bevorzugten Form der Erfindung, daß man zusätzlich zu den (Leicht)Schaumstoffen als Füllstoffpartikel feinteilige Torf- und besonders Braunkohlenstäube mitverwendet und dabei insbesondere solche Polyurethane als Matrix verwendet, welche kationisch modifiziert sind. Diese Träger können weiterhin als zusätzliche Füllstoffe anteilige Mengen (vorzugsweise unter 10 Gew.-%) an anorganischen Füllstoffen, z.B. Aerosil oder Eisenoxiden, enthalten.

Die Polyurethan-Schaumstoffabfälle können in Form eines preisgünstig erhältlichen, zumeist

unregelmäßigen Granulats mit Kantenlängen von 1 mm bis zu mehreren cm als Füllstoff verwendet werden. Der Polyurethan-Schaumstoff wird wie die anderen Füllstoffe im allgemeinen in großen Überschußmengen an Wasser mit den Isocyanatverbindungen zur Reaktion gebracht. Als Isocyanatverbindungen werden im allgemeinen NCO-Prepolymere aus den genannten Komponenten, unter bestimmten Bedingungen jedoch auch Polyisocyanate alleine, insbesondere höherfunktionelle Sumpfprodukte des Polyphenyl-Polymethylen-Polyisocyanats oder TDI-haltige Rückstandsprodukte verwendet. Die angewendete Wassermenge beträgt meistens ein Vielfaches, häufig die 10- bis 15-fache Menge des Schaumstoffgewichtes. Der zumeist und bevorzugt mitverwendete, oberflächenaktive Füllstoff, wie Braunkohlenstaub, wird in einfachen Mischapparaturen überraschend gleichmäßig auf und in den Schaumstoffzellen verteilt und mit Hilfe der Isocyanatreaktionen in der Wasser-gequollenen Polyurethanphase abriebfest gebunden. In den so resultierenden, hochgefüllten Polyurethan(harnstoff)massen ist der beispielsweise als Füllstoff eingesetzte Polyurethan-Weichschaumstoff-Abfall mit einem mittleren Raumgewicht von nur 23 kg/m in seiner ursprünglichen Struktur und physikalischen Eigenschaft völlig verändert und wird erst durch die grundlegende Modifizierung mit den Polyurethanen erfindungsgemäß verwendbar. In den zumeist teilgefüllten Hohlräumen des Schaumstoffes kann eine hinreichende Menge Wasser gebunden werden, so daß es möglich ist, (Weich)Schaumstücke als Füllstoff in Kombination mit sowohl hydrophoben wie auch hydrophilen Polyurethan-Reaktionskomponenten, vorzugsweise NCO-Voraddukten und vorzugsweise mit zusätzlich hydrophilen Füllstoffen (Braunkohle) zu verwenden. Durch die Wechselwirkung von hydrophilen Füllstoffen (vorzugsweise Torf oder Braunkohle) und den physikalisch gebundenen Wassermengen bildet sich eine vorteilhafte Struktur aus, auf der auch ein Bakterienbewuchs in die restlichen Hohlräume der modifizierten Schaumstoffe auftreten kann. Zur Regulierung des spezifischen Gewichts können bei der Herstellung dieser hochgefüllten Polyurethan(harnstoff)massen auch anorganische Füllstoffe in feinstzerteilter Form verwendet werden, wodurch das notwendige spezifische Gewicht für die Klärflüssigkeit eingestellt und gegebenenfalls die Sauerstoffübertragung auf die Bakterien begünstigt werden kann.

Zur Herstellung einer "hydrophoben" Polyurethan(harnstoff)-Matrix können als hydrophobe Reaktionskomponenten die üblichen, nicht hydrophilen höhermolekularen Polyhydroxylverbindungen mit Molekulargewichten von 400 bis etwa 10000, vorzugsweise bis 6000, gegebenenfalls niedermolekulare Kettenverlängerungsmittel und Polyisocyanate verwendet werden, wie sie für die Polyurethanherstellung allgemein bekannt sind und wie sie beispielsweise in der DE-A 28 32 253 aufgeführt werden.

Bei den höhermolekularen "hydrophoben" Polyhydroxylverbindungen handelt es sich aber auch hier vorzugsweise um Polyether, welche durch Addition von z.B. Propylenoxid auf mehrfunktionelle Starter hergestellt werden und keine nennenswerten Mengen an hydrophilierend wirkenden Oxyethylensegmenten ($<$ 20 Gew.-%) enthalten.

Bevorzugt wird zur Umsetzung sowohl der hydrophilen wie auch der hydrophoben PU-bildenden Komponenten Wasser als Kettenverlängerungsmittel und überschüssiges Dispersions- und Quellmittel verwendet.

Eine hydrophobe, vorzugsweise kationisch modifizierte Polyurethanmatrix ist in Mengen von 5 bis 95 Gew.-% Feststoff in Kombination mit hydrophilen Füllstoffen, insbesondere Braunkohle und/oder Torf, wegen ihrer guten Abriebfestigkeit und leichteren Herstellbarkeit besonders bevorzugt.

Unter den Polyurethanen als Matrix sind auch solche bevorzugt, welche zumindest teilweise, z.B. durch den Ionengehalt und/oder Oxyethylensequenzen im Polyetherpolyol hydrophilen Charakter aufweisen. Wie bereits mehrfach ausgeführt, sind die Polyurethane bevorzugt schwach kationisch modifiziert, insbesondere wenn die bevorzugten Füllstoffe auf Basis von Torf und besonders Braunkohl und/oder auf Basis von anorganischen Fülstoffen eingesetzt werden.

Als hydrophile PU-Matrix wird eine solche bevorzugt, welche weniger als 30 % Oxyethylengruppen im Polyetherpolyol enthält, mit Torf und/oder Braunkohle, gegebenenfalls zusätzlich mit PU-Schaumstoffteilchen als Füllstoffe aufgebaut ist und kationische oder kationbildende Gruppen in der Polyurethanmatrix enthält.

Die Formgebung bei der Herstellung der hochgefüllten Polyurethan(harnstoffe) wird in vielen möglichen Varianten auf die jeweilige Verfahrenstechnik der sehr unterschiedlich arbeitenden Kläranlagen abgestimmt. Regelmäßiges oder unregelmäßiges stückiges "Granulat" erhält man nach den üblichen Schneide- oder Granuliertechniken als block-, strang- oder bandförmige Ware. In speziellen Fällen werden die erfindungsgemäß einzusetzenden, hochgefüllten Polyurethan(harnstoffe) in Klärbecken in Folienform gehängt oder spiralartig gewunden eingesetzt. In diesen Fällen werden zur Stabiliserung besonders großer Flächen gegebenenfalls textile Unterlagen nach an sich bekannten Gieß- oder Rakelverfahren mitverwendet.

In der kostengünstigsten und einfachsten Ausführungsform der biologischen Abwasserreinigung werden die Träger in Form eines unregelmäßigen Granulats in einer Größe von 0,1 bis 10 cm, bevorzugt 1 bis 5 cm eingesetzt. Dazu werden die weitgehend oder vollständig ausreagierten, hochgefüllten Polyurethan(harnstoff)e in vorgefertigter Strang-, Block- oder Bandform mit üblichen Zerhackern oder Schneidgranulatoren auf die geeignete Stückgröße zerkleinert. Eventuell entstandenes Feinkorn kann beim Waschen gegebenenfalls isoliert und abgetrennt werden.

Bei Verwendung von Schaumstoffgranulaten und zusätzlichen Füllstoffen werden die Isocyanat-Reaktionen in Knetern oder in mit Pflugschar-ähnlichen Werkzeugen ausgerüsteten Mischapparaturen durchgeführt, so daß eine nachträgliche Zerkleinerung nicht mehr notwendig ist.

Die erfindungsgemäßen, wassergequollenen, hydrophilen Träger stellen im allgemeinen weichelastische, sich mehr oder weniger feucht oder auch trocken anfühlende, abriebfeste Teilchen dar, welche sich in Wasser

suspendieren lassen und dort langsam absinken.

Es war nicht vorauszusehen, daß die mit Füllstoffen wie Aktivkohle oder Braunkohle hochgefüllten, Polyurethan(harnstoff)massen als Träger mit stark hydrophilen Eigenschaften in homogener Struktur ausreichend abriebfest hergestellt werden können, auf die biologische Klärung einen so günstigen Einfluß nehmen, obwohl die Füllstoffe aktiver Art, wie z.B. Schwarztorf und Braunkohle, innerhalb der Polyurethanmasse eingebettet liegen und sich die Biomasse der Bakterien zunächst in der äußeren, kohärenten wäßrigen Phase befindet, und erst dort von außen aufwächst.

Die erfindungsgemäß eingesetzten Träger eignen sich für die meisten der gebräuchlichen Verfahren zur biologischen, aeroben oder anaeroben Klärung von Abwässern sowohl in industriellen als auch in kommunalen Kläranlagen.

Die biologische Umwandlung organischer Verunreinigungen mittels Bakterien unter Sauerstoffversorgung in überwiegend aus Kohlehydraten und Proteinen bestehenden Bakterienmassen in $CO_2$ und Wasser, ferner gegebenenfalls Nitrate und Stickstoff, wird als aerobe Abwasserreinigung bezeichnet.

Die Umwandlung organischer Verunreinigungen, bevorzugt Kohlehydrate, Eiweiß und Fette ohne Sauerstoffzufuhr mittels säurebildender Bakterien, sulfatreduzierender Bakterien und methanerzeugender Bakterien unter Bildung von Schwefelwasserstoff, Kohlendioxid und insbesondere Methan wird als anaerobe Abwasserreinigung bezeichnet.

Die erfindungsgemäßen hochgefüllten, hydrophilen Polyurethanmassen als Träger bewirken sowohl im ruhenden als auch im bevorzugt bewegten Zustand die verbesserte biologische Reinigung von Abwässern, besonders überraschend auch von Abwässern mit sehr geringer Konzentration an Schadstoffen, beispielsweise unter 500 mg/l, was für die Endreinigungsstufe in Kläranlagen zum einwandfreien Ablauf von geklärtem Wasser sehr wichtig ist.

Die erfindungsgemäße Reinigung kann deshalb in der ersten und/oder in nachgeschalteten weiteren Belebungsstufen erfolgen, indem man die Träger an beliebiger Stelle einem oder mehreren kombinierten Belebtschlammbecken zuführt. Da die erfindungsgemäßen, Polyurethan(harnstoff)massen als Träger trotz ihres relativ geringen Anteils an Polyurethanen in hohem Grade in Wasser abriebfest sind, können sie sowohl in Klärbecken mit hoher Turbulenz als auch in Behältern mit nicht oder nur wenig bewegten Klärschlämmen eingesetzt werden, d. die hochgefüllten Polyurethan(harnstoff)massen können in entsprechenden Wirbel- oder Festbettanordnungen verwendet werden.

Durch Einleiten von Luft und/oder (reinem) Sauerstoff entsteht bei den in großem Umfang betriebenen aeroben Klärverfahren eine beträchtliche Turbulenz. Dadurch werden in einem sogenannten flüssigen Wirbelbett die hochgefüllten Polyurethanmassen und der Belebtschlamm lebhaft in Bewegung gehalten. Trotzdem bildet sich auf der Oberfläche und teilweise auch im Inneren des hochgefüllten Polyurethans ein Bakterienrasen, der die im experimentellen Teil beschriebene, überraschend erhöhte Reinigungsleistung erzielt. Der im Polyurethan inkorporierte Füllstoff hat in mehrfacher Hinsicht einen vorteilhaften Einfluß auf das verbesserte Entsorgungsverfahren. Je nach Art der Füllstoffe und Art der Polyurethan-Matrix werden die mechanische Festigkeit und die Hydrophilie des Polyurethans verbessert und insbesondere überraschend die bioaktive Assimilationsfähigkeit der im Abwasser gelösten organischen Stoffe wesentlich erhöht. Außerdem ist der im hydrophilen Polyurethan eingebundene Füllstoff oder die Füllstoffmischung gleichzeitig ein Regulator für die Einhaltung optimaler, spezifischer Gewichte der für Wasser durchlässigen, erfindungsgemäß eingesetzten Träger, so daß in den üblichen etwa 4 bis 12 m hohen, stark gefüllten Belebtschlammbecken eine gleichmäßige Verteilung der Träger mit schwacher Sinktendenz oder die Erhaltung eines schwebenden Zustandes möglich ist. Dies ist für die meisten der heute von den Kommunen oder der Industrie betriebenen, biologisch arbeitenden Kläranlagen von besonderer Bedeutung oder sogar eine verfahrenstechnische Voraussetzung.

Wie bereits erwähnt, können im Gegensatz dazu übliche, nicht erfindungsgemäß modifizierte schaumartige Kunststoffe mit makroporöser Struktur, einschließlich Polyurethan-Schaumstoffe, in der praktizierten Kläranlagentechnik nicht so wirkungsvoll und nicht wie erforderlich in mehrjährigem Dauerbetrieb gehandhabt werden, da diese Schaumstoffe selbst im Fall relativ hoher Raumgewichte von ca. 90 kg/m$^3$ noch nach Monaten zu erheblichen Anteilen an der Oberfläche der Klärbecken schwimmen und technische Schwierigkeiten (z.B. Verstopfungen) hervorrufen. Ganz unmöglich hat sich die Verwendung von Schaumstoffen üblich niedriger Raumgewichte von 20 - 35 kg/m$^3$ (sogenannte Abfallschaumstoffmischungen) herausgestellt. Diese Schaumstoffe schwimmen auch unter kräftigem Rühren an der Wasseroberfläche.

Wie bereits ausgeführt werden in einer speziellen Ausführungsform der Erfindung die Polyurethan(harnstoff)massen mit ihren Füllstoffen und gegebenenfalls Zusätzen so eingestellt, daß sie im Belebungsbecken der Kläranlage sofort oder innerhalb weniger Stunden absinken und trotz ausreichender Luft- und Sauerstoffdurchflutung als Trägermaterialien mit der nach einer gewissen Zeit beträchtlichen Menge anhaftenden Biomasse ein von sauerstoffhaltigem Gas durchströmtes Wirbel- oder Festbett mit überstehender Polyurethan-freier Wasserschicht bilden, das im Bedarfsfall, z.B. zum gelegentlichen oder kontinuierlichen Abführen von Überschußschlamm durch eine entsprechend starke Begasung verändert werden kann. Die erfindungsgemäß eingesetzen, hochgefüllten, hydrophilen Polyurethan(harnstoff)massen werden auch hierbei nicht ausgetragen.

Neben der weitverbreiteten aeroben biologischen Reinigung von Abwässern hat, insbesondere bei stark kohlehydrathaltigen Abwässern, beispielsweise in der Lebensmittelindustrie, auch die anaerobe Abwasserreinigung eine große technische Bedeutung. In manchen Fällen ist eine kombinierte anaerobe und

aerobe biologische Abwasserreinigung besonders wirkungsvoll. Auch hier sind die erfindungsgemäßen, hochgefüllten, hydrophilen Polyurethan(harnstoff)-Träger günstig einzusetzen.

Der Grad der Hydrophilie wird bei den erfindungsgemäßen, hochgefüllten Polyurethan(harnstoff)massen bevorzugt so eingestellt, daß eine hohe Wasseraufnahme innerhalb von Stunden oder wenigen Tagen unter starker Quellung erfolgt oder eine größere Wassermenge bereits bei der Herstellung der Polyurethanmassen als disperse Phase vorliegt und somit die Träger bereits voll gequollen sind. Bei der anaeroben Klärtechnik wie auch der aeroben Abwasserreinigung können durch die erfindungsgemäßen Produkte größere Mengen gasförmiger Produkte wie Kohlensäure, Methan oder Schwefelwasserstoff gut entweichen.

Der "in situ"-Einbau von Mikroorganismen in Polyurethane oder andere Kunststoffe ist, wie schon erwähnt, bei den für die Abwasserreinigung verwendeten Biomassen auch unter sehr schonenden und technisch aufwendigen Bedingungen ohne Verlust an vermehrungsfähigen Bakterien und starker Minderung der Bioaktivität praktisch nicht möglich. Nach dem erfindungsgemäßen Reinigungsverfahren erübrigt es sich auch, weil in den ausreagierten, hochgefüllten Polyurethan(harnstoff)-Trägern überraschenderweise sogar im Wirbelbett ein großer Teil der Bakterienkulturen einen festen Halt finden und sogar in die hochgefüllten, stark quellfähigen, hydrophilen Polyurethanmassen eindringen können und gegen mechanische Schädigung somit geschützt sind. Die Bakterien sitzen am gleichen Ort, an dem durch Adsorption die hochgefüllten Polyurethan(harnstoffe) eine erhöhte Konzentration an gelösten Schadstoffen bewirken.

Die Abbauleistung und Reinigungswirkung, d.h. die Verbesserung der Abwassergüte, nach dem erfindungsgemäßen Verfahren beschränkt sich nicht nur auf eine deutliche Verringerung des chemischen Sauerstoffbedarfs (CSB-Werte), sondern begünstigt auch eine drastische Reduzierung der Daphnien-Toxizität und Fisch-Toxizität, was zweifellos von mindestens ebenso großer Bedeutung ist. Außerdem wird eine weitgehende Beseitigung des in vielen Kläranlagen auftretenden üblen Geruchs und eine zusätzliche deutliche Farbaufhellung des geklärten Abwassers erreicht. Darüber hinaus kann die Kapazität einer vorhandenen biologischen Kläranlage deutlich gesteigert werden.

Die erfindungsgemäßen, hochgefüllten Polyurethan(harnstoff)massen als Träger verbessern auf zweierlei Weise die Reinigungsleistung biologischer Kläranlagen ganz entschieden. Durch die erfindungsgemäßen Träger können nicht nur allgemein Abwasserinhaltsstoffe an der Oberfläche der Träger aufkonzentriert werden, es können vielmehr gezielt auch Stoffe aus Abwässern angereichert werden, die sonst in ihrer gelösten Form und aufgrund ihrer geringen Konzentration neben anderen, gut abbaubaren Verbindungen von den Mikroorganismen des Belegtschlamms nicht verwertet werden könnten. Die Substratkonzentration solcher Verbindungen wird dafür auf den für den biologischen Abbau notwendigen Wert angehoben. Gleichzeitig siedeln sich auf den hochgefüllten Träger Mikroorganismen an und vermehren sich aufgrund des gut angereicherten Substratangebotes optimal. Adsorptionsflächen für Substrate, d.h. für die im Abwasser enthaltenen organischen Verbindungen geringerer Konzentrationen werden nach der Umwandlung durch Bakterien wieder freigesetzt. Die Vorgänge Adsorption und Verwertung von gelösten Abwasserinhaltsstoffen an den Trägern, auf welchen die Mikroorganismen aufgewachsen sind, laufen kontinuierlich ab. Es bildet sich ein Gleichgewichtszustand zwischen Adsorption und Anreicherung der im Wasser gelösten Stoffe und dem biologischen Abbau durch die an der Oberfläche der Träger gleichfalls angesiedelten Mikroorganismen. Dadurch wird eine fortlaufende Regeneration der Oberfläche erreicht. Ebenso bildet sich in Abhängigkeit vom Substratangebot ein Gleichgewicht zwischen Biomassen-Wachstum auf den hochgefüllten Polyurethan(harnstoff)massen und Ablösung der Stoffe, so daß ständig eine erhöhte Biomassen-Aktivität an den Trägern erhalten bleibt.

Es ist möglich, mit Hilfe der erfindungsgemäßen Träger die Belebtschlammkonzentration in biologischen Kläranlagen mindestens zu verdoppeln, so daß die Kapazität vorhandener Kläranlagen erheblich erhöht wird oder bei Neuanlagen kleinere Beckenvolumina ausreichen.

Eine einfache technische Anwendung der Träger besteht in der Zugabe in ein konventionelles, biologisches Belebungsbecken. Durch die Gas/Flüssigkeitsströmung werden die Trägerteilchen in Schwebe gehalten und im Belebungsraum gleichmäßig verteilt. Die hochgefüllten Polyurethan-Träger können aufgrund ihrer extrem hohen Abriebfestigkeit problemlos auch mit Oberflächen-Belüftern ausgestatteten Belebungsbecken eingesetzt werden.

Besonders vorteilhaft wirkt sich der Einsatz bei der Nitrifizierung und Denitrifizierung von Abwässern aus, da die hierfür notwendigen Mikroorganismen langsam und vorzugsweise auf Aufwuchsflächen wachsen.

Für den aeroben Bereich der Abwässerreinigung können diese Anlagen auch als Wirbelbett-Reaktoren oder als Festbett-Reaktoren betrieben werden. Die Durchströmung im Festbett kann sowohl von unten nach oben als auch von oben nach unten erfolgen. Ebenso ist der Betrieb als Tropfkörper möglich. Hochgefüllte Polyurethanmassen werden wegen ihrer besonders großen Oberfläche auch als Bewuchsfläche (Tauchtropfkörper) vorteilhaft eingesetzt.

Für die Anwendung im Bereich der anaeroben Abwasserreinigung stehen die mit den Polyurethan(harnstoff)massen mit einer stark erhöhten Abbauleistung und drastisch verkürzten Verweilzeiten des schadstoffhaltigen Wassers in den Kläranlagen betrieben werden kann, für die hochgefüllten, erfindungsgemäß einsetzbaren Trägermassen mehrere Möglichkeiten zur Auswahl. Die Anlagen können sowohl im Fließ- oder Wirbelbett als auch im Festbett betrieben werden. Bei einer Festbett-Fahrweise können die hochgefüllten Polyurethanmassen als Granulat oder als feste Einbauten eingesetzt werden, wie z.B. in Form von aufgerollten Matten oder vorgefertigten Einschüben. Auch hier kann die Durchströmung im Festbett sowohl von unten nach oben wie auch umgekehrt erfolgen. Die Betriebsweise wird im allgemeinen von der

jeweiligen Beschaffenheit und Besonderheit des Abwassers abhängig durchgeführt.

Der technische Fortschritt der erfindungsgemäßen Verwendung ist, wie im Beispielteil auch im einzelnen nachgewiesen wird, fernerhin und insbesondere darin zu sehen, daß mit den hochgefüllten Polyurethan(harnstoff)massen als Träger sogar konventionell biologisch vorgereinigte Abwässer wirkungsvoll noch von solchen Schadstoffen befreit werden können, die einen relativ sehr großen Anteil schwer abbaubarer, organischer Restmengen enthalten, den die Mikroorganismen in einer konventionellen biologischen Anlage aufgrund des Verdünnungsgrades ihrer langsamen Vermehrung und Gefahr des Auswaschens nicht mehr abbauen können.

Mit den erfindungsgemäßen Trägern kann auch eine Reinigung von Abluft von organischen Bestandteilen, z.B. Abluft von Kläranlagen oder der Abluft von produktionsprozessen organischer Verbindungen, durch ein- oder mehrfaches Durchsaugen oder in Kontakt mit feuchten oder nassen, bzw. in Wasser suspendierten, hochgefüllten Polyurethanharnstoff-Trägern erfolgen. Die Reinigung der Abluft erfolgt hierbei durch Auswaschen der Abluft unter Übergang der Verunreinigungen in die wäßrige Phase und anschließende erfindungsgemäße Reinigung dieses verunreinigten Wassers unter biologischem Abbau.

Beispielsweise wird durch eine oder mehrere, in Reihe geschaltete Säulen, die mit dem erfindungsgemäß einsetzbaren Polyurethanharnstoff-Trägermassen in eine auf 50 bis 80 Vol.-% verdichteten Packung gefüllt sind und gegebenenfalls mit geeigneten Mikroorganismen-Suspensionen für den biologischen Abbau versetzt werden, gleichzeitig (z.B. von oben) Abluft eingeleitet und mit Wasser berieselt. Nach Verweilzeiten von etwa 5 bis 60 Sekunden erfolgt bereits eine hohe biologische Eliminierung von organischen Schadstoffen, die nach einer relativ kurzen Startperiode zu einer lebhaften Vermehrung von abbauenden Mikroorganismen führt. Auch bei diesem ökonomisch günstigen Prozeß wird wie in wäßrigen Suspensionen, in einem physikalischbiologischem Gleichgewicht die Adsorption der Schadstoffe und deren Abbau in Gegenwart eines Feuchtigkeitsfilms auf und in der Trägermasse gleichzeitig und am gleichen Ort vollzogen. Der Überschuß an zuwachsenden Mikroorganismen kann durch gelegentliches, ein- oder mehrmaliges Füllen der Bioreaktor-Säulen mit Wasser und kräftiges Durchblasen von Luft abgezogen werden.

Die Entsorgung der erfindungsgemäß verwendeten Trägermassen ist wegen ihres inerten Charakters problemlos. So können diese beispielsweise in Kläranlagen, in denen der Überschußbelebtschlamm in einem Wirbelschichtofen verbrannt wird, während eines jahrelangen Langzeitgebrauchs gegebenenfalls mit dem Überschlußbelebtschlamm ausgetragen werden und als Energiestoff mitverbrannt werden. Im allgemeinen ist ein Austausch des gesamten Trägermaterials jedoch nicht erforderlich.

## Ausführungsbeispiele

A) Herstellung der Trägermassen (nichterfindungsgemäßes Herstellungsverfahren)

A)1. Herstellung der NCO-Prepolymeren

Die Herstellung der NCO-Prepolymeren erfolgt in an sich bekannter Weise in einer Rührapparatur durch etwa 2- bis 3-stündiges Erhitzen der Ausgangskomponenten (höhermolekulare Polyhydroxylverbindung, gegebenenfalls niedermolekulare Polyole, vorzugsweise tertiären Stickstoff enthaltende Polyole und Polyisocyanate) bei Temperaturen von etwa 70 bis 90°C, bis annähernd der berechnete NCO-Gehalt erreicht ist.

**Tabelle 1** Zusammensetzung und Charakterisierung der NCO-Prepolymeren (PP) für Beispiele 1-24.

| Typ | Bezeichnung | Viskosität mPas/25°C | % NCO | Isocyanat Menge/Art | Polyetherpolyol Menge / Art | | NM | DMS | IQU |
|---|---|---|---|---|---|---|---|---|---|
| KIPP | A | 12.500 | 5,1 | 16,6 TDI | 80,4 | PHILV | 1,5 | 1,5 | 120 |
| KIOPP | B | 64.000 | 5,3 | 19,1 TDI | 57,1<br>19,0 | PHILV<br>PHOBL | 2,4 | 2,4 | 200 |
| BIPP | C | 11.200 | 5,6 | 18,5 TDI | 79,1 | PHILV | 2,4 | 2,4 | 200 |
| IPP | D | 56.000 | 4,9 | 22,4 D44R | 77,6 | PHILV | - | - | - |
| KOPP1 | E | 9.500 | 5,9 | 20,0 TDI | 41,9<br>35,0 | PHOBV<br>PHOBL | 1,5 | 1,5 | 120 |
| KOPP2 | F | 12.200 | 3,2 | 14,1 TDI | 45,9<br>38,4 | PHOBV<br>PHOBL | 0,8 | 0,8 | 60 |
| (K)OPP | G | 15.600 | 5,7 | 20,6 TDI | 76,3 | PHOBV | 3,1 | | 260 |
| OPP | H | 7.800 | 3,3 | 11,9 TDI | 88,1 | PHOBV | - | - | - |
| (K)OPP | I | 4.460 | 5,6 | 20,4 TDI | 42,5<br>35,5 | PHOBV<br>PHOBL | 1,5 | - | 130 ST |

Typ = Charakterisierung der NCO-Prepolymeren (PP)
K = Kationisch
(K) = Basisch mit tert. Stickstoff, zur Kationenbildung befähigt
I = Hydrophil
O = Hydrophob
(Menge in Gewichtsteilen)
ST = Langzeitstabilisierung des Prepolymeren mit 0,1 Gew.-% conz. $H_2SO_4$, bezogen auf Prepolymere (in Form einer 10 %igen Lösung in Polyether)

Die Mengenangaben in der Tabelle 1 erfolgen in Gewichtsteilen. Eingesetzte Isocyanate:
TDI = Toluylendiisocyanat-2,4-, -2,6-Isomeren-gemisch 80:20
D 44 R, Destillationsrückstand aus der Produktion von 4,4'-Diphenylmethandiisocyanat, Anteile an höhermolekularen Polyphenylpolymethylen-polyisocyanaten enthaltend, NCO-Gehalt 29,8 Gew.-%.

Polyetherpolyole:
PHILV = hydrophiler, verzweigter Polyether, gestartet auf Trimethylolpropan, umgesetzt mit 40 Teilen Propylenoxid und 60 Teilen Ethylenoxid, OH-Zahl 26.
PHOBV = hydrophober, verzweigter Polyether, gestartet auf Trimethylolpropan mit 80 Teilen Propylenoxid und danach 20 Teilen Ethylenoxid umgesetzt, OH-Zahl 28.
PHOBL = hydrophober, linearer Polyether aus 1.4-Butandiol und Propylenoxid, OH-Zahl 56.

Verbindungen mit tertiärem Stickstoff:
NM = N-Methyl-diethanolamin
Quaternierungsmittel:
DMS = Dimethylsulfat
PPS = 85 %ige Polyphosphorsäure
Ionifizierungsangaben:
IQU = Kationenäquivalent oder tertiäres Stickstoffäquivalent (Kationen bildende Gruppe) in Milliäquivalenten pro 1000 g NCO-Prepolymer.

A)2. <u>Umsetzung der NCO-Prepolymeren zu den Trägermassen entsprechend Patentbeispielen 1 - 8 (allgemeine Verfahrensvorschrift)</u>

Der Füllstoff wird in der angegebenen Menge Wasser suspendiert und/oder benetzt das NCO-Prepolymer schnell und intensiv bei Raumtemperatur eingerührt. Im Falle der stark hydrophilen NCO-Prepolymeren erstarrt das Reaktionsgemisch bei Raumtemperatur schon nach wenigen Minuten z.B. 1 bis 3 Minuten, bei den hydrophoben NCO-Prepolymeren jedoch erst nach 1 bis 2 Stunden. Die Reaktionszeit wird gegebenenfalls durch Zugabe von 0,1 bis 0,5 Gew.-% Katalysator, bezogen auf Prepolymermenge, und/oder durch Verwendung von heißem Wasser (ca. 80° C) auf wenige Minuten verkürzt.

Soweit die Kationenbildung im Prepolymer noch nicht erfolgt ist (z.B. durch Quarternierung), fügt man der wäßrigen Füllstoffsuspension die berechnete oder eine Teilmenge an Säuren (hier wird bevorzugt Phosphorsäure oder Schwefelsäure) zur Aminsalzbildung zu oder nutzt im Falle der Verwendung von Braunkohle oder Torf als Füllstoffe die darin enthaltenen Huminsäuren zur Salzbildung unter Ausbildung von Polyurethan-Humaten, gegebenenfalls unter Mitverwendung nur anteiliger Mengen an Mineralsäuren (z. B. 5-10 Äquivalent % Schwefelsäure, bezogen auf tert. N des NCO-Prepolymeren).

Die so hergestellten, gegebenenfalls in üblichen Schneidgranulatoren zerkleinerten, erfindungsgemäßen Trägermassen sedimentieren je nach Zusammensetzung verschieden schnell, aber vollständig im Klärwasser.

B) Verwendung der Trägermassen im biologischen Reinigungsverfahren (erfindungsgemäß)

B)1. Charakterisierung der angewendeten biologischen Abwasserreinigungsverfahren

I.) Beschreibung einer kontinuierlich arbeitenden Festbett-/Wirbelbett-Apparatur (siehe Fig. 1)

Hierbei wird das Verfahren in der Festbett-Apparatur als Verfahren I a) bezeichnet, das Verfahren in der Wirbelbett-Apparatur entsprechend als Verfahren I b).

Ein Teilstrom des Ablaufes einer ersten Belebungsstufe einer industriellen Großanlage mit $CSB_5$-Werten von 350 $\pm$ 100 mg/l gelegentlich + 250 g/l, und $BSB_5$-Werten von 23 $\pm$ 5 mg/l, gelegentlich $\pm$ 15 mg/l wird kontinuierlich mit der Pumpe (1) über die Leitung (2) in die Säule (3) gepumpt. Die Säule wird wie in den Patentbeispielen angegeben mit dem Trägermaterial (4) gefüllt, auf dem sich die Belebtschlammbiomasse ansiedeln soll.

Das zur Begasung und zur Sauerstoffversorgung der Säule notwendige Gas wird durch den Rotameter (5) über die Leitung (6) mit einer Fritte oder Lochplatte (7) der Säule (3) zugeführt. Durch die Zufuhr großer Mengen an sauerstoffhaltigem Gas kann die Säule als Wirbelbett betrieben werden oder bei geringer Gaszufuhr als Festbett. Das sauerstoffhaltige Gas tritt an der Fritte oder Lochplatte (7) in Form kleiner Bläschen aus und durchströmt die Säule (3). Das über die Leitung (2) zugeführte Abwasser durchströmt ebenfalls die Säule (3) auf deren Füllung (4) sich in wenigen Tagen bei den erfindungsgemäßen Trägermaterialien ein biologischer Rasen bildet und tritt danach über den Ablauf (8) der Säule (3) aus. Das behandelte Abwasser wird nach einer durchschnittlichen Verweilzeit von 4 Stunden über die Leitung (8) in einen Klärer (9) eingeleitet. Aus der Säule (3) herausgespülte Teilchen des biologischen Rasens scheiden sich im Klärer ab (9) und können über den Absperrhahn (10) abgezogen werden. Das geklärte Abwasser verläßt den Klärer (9) über die Ablaufleitung (11).

II. Beschreibung einer kontinuierlich arbeitenden Rühr-Apparatur (Fig. 2)

Ein Teilstrom des Ablaufes einer ersten Belebungsstufe einer industriellen Großanlage ($CSB_5$ 300-400 mg/l, $BSB_5$ 18 - 27 mg/l) wird kontinuierlich mit der Pumpe (1) über die Leitung (2) in den Behälter (3) gepumpt. Über den Rotamesser (4) und die Leitung (5) wird mit der Fritte (6) dem Behälter (3) sauerstoffhaltiges Gas zugeführt. Das zu behandelnde Abwasser und das Trägermaterial (7), auf dem die Bakterien wachsen sollen, wird mit dem Rührer (8) in Bewegung gehalten, so daß eine gleichmäßige Verteilung des Trägermaterials und des Belebtschlamms gewährleistet wird. Das durch die Fritte (6) in feinen Blasen austretende Gas wird vom Rührer (8) im Behälter (3) verteilt, wodurch eine ausreichende Sauerstoffversorgung des Behälterinhaltes möglich ist.

Das aus dem Behälter (3) überlaufende, behandelte Abwasser wird durch die Leitung (9) in den Klärer (10) geleitet.

Aus dem Behälter (3) herausgespülter Belebtschlamm (7), der sich im Klärer (10) absetzt, kann mit der Pumpe (11) über die Leitung (12) in den Behälter (3) zurückgeführt oder ausgekreist werden. Das geklärte Abwasser verläßt den Klärer (10) über die Leitung (13).

In den Patentbeispielen wird die kontinuierliche Reinigung in der oben beschriebenen Rührapparatur als Reinigungsverfahren II bezeichnet. Die mittlere Verweilzeit beträgt 4 Stunden.

**Beispiel 1**

1.1 Trägermaterial:

67,7 Gew.-Teile einer nativen Braunkohle aus dem Aachener Braunkohlerevier mit 52 % Restfeuchte, welche zu Teilchen unter 200 µm zerkleinert wurden und somit als Braunkohlenstaub vorliegen, werden in 35,2 Gew.-Teilen Wasser verrührt und nach dem allgemeinen Herstellungsverfahren, wie oben angegeben, mit 7,5 Gew.-Teilen des kationischen NCO-Prepolymeren KIPP-A (5,1 Gew.-% NCO) verrührt. Es entsteht ein Trägermaterial in Form eines wassergequollenen, sich feucht anfühlenden, leicht elastischen Feststoffes, der in Stücke unter einer Größe von 12 mm granuliert wird. Das feste, mit Braunkohle gefüllte kationische Polyurethan(harnstoff)-Trägermaterial enthält 32,5 g Braunkohle-Trockensubstanz in 40 g wasserfrei angenommener Trägermasse (aus wasserfrei berechneter Braunkohle und wasserfrei angenommener Polyurethane), folglich 81,25 Gew.-%, an Braunkohle, bezogen auf Trockenmasse des gefüllten Polyurethan(harnstoff)-Trägers.

Das erhaltene, granulierte Trägermaterial wird nun mit überschüssigem Wasser versetzt, 24 Stunden (bei Raumtemperatur) vollständig gequollen und nach dem Aufrühren das darüber stehende Wasser abdekantiert. Der hieraus abgeleitete Wert, der die Gewichtsprozentmenge Wassers im und zwischen dem gequollenen Träger (füllstoffhaltigem Polyurethanharnstoff) angibt, wird hier als Wasseraufnahmefähigkeit (WAF bezeichnet (siehe nähere Erläuterung weiter unten).

Der Feststoffgehalt der so hergestellten wäßrigen Suspension des Granulats in Form eines nunmehr stark gequollenen Trägermaterials beträgt im Beispielfall 140 g Feststoff pro Liter "Suspension" (ohne überstehendes Wasser). Der Feststoffgehalt in einem Liter einer derartigen Suspension (ohne überstehendes Wasser) wird als Trockensubstanz der Suspension (abgekürzt TS(S)) bezeichnet. Das Gewicht von einem Liter dieser Suspension des stark gequollenen Trägermaterials (ohne überstehendes Wasser) wird als Suspensionsgewicht (abgekürzt SG) bezeichnet.

Aus dem Gewicht von einem Liter der Suspension (SG) und dem Wert der darin enthaltenen Trockenmasse des Träger (TS-S) wird der Wert des sogenannten Suspensionsfaktors (F4) abgeleitet. Der Wert des Suspensionsfaktors F4 minus 1 (F4-1) gibt an, die wievielfache Menge Wasser (bezogen auf Trägertrockensubstanz) in der Suspension insgesamt (als Quellwasser und als Wasser in den Zwischenräumen in oder zwischen den Trägerpartikeln) sich befindet.

Der Wert des Suspensionsfaktors F 4 wird in Praxis dadurch bestimmt, daß man die Trägertrockenmasse von einem Liter einer Suspension der Träger in Wasser (ohne überstehendes Wasser) bestimmt und das Gewicht der Suspension (SG) durch das Gewicht der darin enthaltenen Trägertrockenmasse (TS(F)) dividiert:

$$F4 = \frac{SG}{TS(S)}\ .$$

Aus diesem Wert des Suspensionsfaktors F4 kann die Wasseraufnahmefähigkeit (WAF) als Charakteristikum für die erfindungsgemäß zu verwendenden Trägermassen nach folgender Formel bestimmt werden:

$$WAF = \frac{F4\ \text{minus}\ 1}{F4} \cdot 100;\quad (\text{in}\ \%).$$

Dieser Wert der Wasseraufnahmefähigkeit (WAF) in Gew.-Prozenten ausgedrückt, gibt ein anschauliches Bild für den Zustand der hochgequollenen und gegebenenfalls wasseraufnehmende Zwischenräume tragenden Trägermassen wieder, wie sie in dem gequollenen Zustand in der Kläranlage verwendet werden. Im Beispiel 1.1 beträgt beispielsweise der Trockensubstanzgehalt von 1 Liter der Suspension ohne überstehendes Wasser 140 g Feststoff. Bei einem Suspensionsgewicht von 1013 g pro Liter Suspension errechnet sich hieraus der Suspensionsfaktor F4 = $\frac{1013}{140}$ = 7,236. Ein Gewichtsteil Trockensubstanz der Trägermasse wird somit mit der 6,236-fachen Wassermenge in die beschriebene gequollene Suspensionsform überführt. Anders ausgedrückt, beträgt der Wert der Wasseraufnahmefähigkeit 6,236 durch 7,236 mal 100 = 86,2 %.

Zur weiteren Charakterisierung der Trägermassen werden noch die Schüttgewichte (in g/l) nach unterschiedlichen Behandlungsarten bestimmt, wobei die Schüttgewichte S1 bis S3 unter folgenden Bedingungen ermittelt werden:

S1. Schüttgewicht, abgetropft:

Die Trägermasse wird 24 Stunden in einer großen Überschußmenge an Wasser suspendiert, danach wird mit dieser gequollenen Masse ein Sieb mit 2 mm Sieblöchern 10 cm hoch gefüllt und 1 Stunde abtropfen gelassen; die verbleibende Füllmenge wird danach in einem Meßgefäß gewogen und auf das Schüttgewicht pro Liter umgerechnet.

S2. Schüttgewicht, ausgequetscht:

Die nach S1 abgetropfte Trägermasse wird auf einem 1 mm Sieb 5 Minuten lang einem Druck von 3 bar ausgesetzt und danach in einem Meßgefäß gewogen. Nach Umrechnung auf einen Liter wird das Schüttgewicht S2 ermittelt.

S3. Schüttgewicht, getrocknet:

Die feuchte, ausgequetschte Trägermasse wird (etwa) 1 Tag bei 110° unter Vakuum bis zur Gewichtskonstanz getrocknet und in einem Meßgefäß wie oben ausgewogen.

Im oben angeführten Beispiel betragen die so bestimmten Werte von S1 bis S3:

S 1 (abgetropft) 515 g/l

S 2 (ausgequetscht) 503 g/l

S 3 (getrocknet) 239 g/l.

Zur besseren Vergleichbarkeit der Werte werden noch folgende Faktoren definiert:

F1: Der Volumenfaktor, ist der Quotient aus dem Gewicht der in Wasser gequollenen, abgetropften Probe pro Liter und der ermittelten Gewichtsmenge Trockensubstanz aus einem Liter wäßriger Suspension (TS)(S)).

$$F1 = \frac{F1}{TS(S)}$$

F2: Der Quetschfaktor ist entsprechend der Quotient der ausgequetschten Probe pro Liter (Schüttgewicht S2) und der Trockensubstanzmenge pro Liter Suspension.

$$F2 = \frac{S2}{TS(S)}\ .$$

F3: Der Quellfaktor ist der Quotient aus der Gewichtsmenge der abgetropften Probe (S1) und die nach vollständiger Entfernung des Wassers aus der abgetropften Probe ermittelten Gewichtsmenge der Trockenmasse (TS(S1)).

$$F3 = \frac{S1}{TS(S1)}$$

Die Volumen-, Quetsch- und Quellfaktoren sollen mindestens 2, bevorzugt mindestens 3, besonders bevorzugt mindestens 4 betragen. Die Obergrenzen der genannten Faktoren liegen etwa unterhalb 20, bevorzugt unter 15. Außerdem sollen sich die drei Faktoren der gleichen Probe möglichst wenig unterschieden, d.h. maximal nur um das Dreifache, bevorzugt nur um das Doppelte unterschiedlich sein.

1.2 Verwendung des Trägermaterials in dem biologischen Reinigungsverfahren I a) (erfindungsgemäße Verwendung)

Nach dem beschriebenen Reinigungsverfahren in einem Festbett wird ein Festbettvolumen von 1.000 1 zu 75 Vol.-% mit dem oben beschriebenen Trägermaterial gefüllt und eine Zulauf-/Ablaufmenge von 250 l/h eingestellt (siehe Fig. 1 und allgemeine Verfahrensbeschreibung I a)).

Nach einer Laufzeit von 3 Wochen stellen sich folgende Ergebnisse ein:

| | erfindungsgemäß | ohne Träger (Vergleichsversuch) |
|---|---|---|
| $CSB_5$-Abbau | 41 % | 8 % |
| Daphnientoxizität | 1:200 - Verdünnung | 1:5.000 - Verdünnung |
| Fischtoxizität | 1:10 - Verdünnung | 1:24 - Verdünnung |
| Geruchsschwellenwert | 1:180 - Verdünnung | 1:1.000 - Verdünnung |

(Verdünnung mit reinem Wasser).

In diesem und den nachfolgenden Beispielen wurden die-Bestimmungen des chemischen Sauerstoffbedarfs nach DIN 38409-Teil 41 (Dezember 1980), der Fischtoxizität nach DIN 38412-Teil 15 (Juni 1982), der Daphnientoxizität nach DIN 38412-Teil 11 (Oktober 1982) und des Geruchsschwellenwertes nach den deutschen Einheitsverfahren zur Wasseruntersuchung, Loseblatt-Sammlung, Ausgabe 1982, Verlag Chemie-Weinheim, vorgenommen.

Farbaufhellung:

| Transmission bei | 600 nm | 500 nm | 400 nm |
|---|---|---|---|
| Ergebnis (%) | 95,5 | 91,5 | 75,0 (erfindungsgemäß) |
| Ergebnis (%) | 76,0 | 67,5 | 47,0 (Vergleichsversuch) |

**Beispiel 2**

2.1 Trägermaterial:

Mit Braunkohle gefüllte, ampholytische (Kationen und Anionen enthaltende) Polyurethan(harnstoff)masse nach der Herstellungsmethode A aus

41,66 Gew-Teilen nativer Braunkohle mit 52 % Restfeuchte (20,0 Gew.-Teile Trockensubstanz an Braunkohle), zerkleinert unter eine Größe von 200 µm, 10,0 Gew.-Teile kationisches NCO-Prepolymer KIPP-A (wie in Beispiel 1)

70,0 Gew.-Teile Wasser, in dem 0,2 Gew.-Teile Diaminosulfonat der Formel $H_2N-CH_2-CH_2-CH-NH_2$

$CH_2$

$SO_3Na$

Das Trägermaterial enthält im Feststoff (wasserfrei) etwa 66,2 Gew.-% Braunkohle.
Das Granulat wurde in Stückgrößen unter 12 mm zerkleinert. Der Gehalt an Trockensubstanz (TS-S) beträgt in Wasser suspendiert 112 g/l Suspension (ohne überstehendes Wasser, siehe Erläuterungen bei Beispiel 1).

Die Schüttgewichte (g/l) betragen:

| | | |
|---|---|---|
| Abgetropft: | 645 g/l | (S1), |
| Ausgequetscht: | 505 g/l | (S2), |
| Getrocknet: | 349 g/l | (S3). |

2.2 Verwendung der Trägermaterialien im biologischen Reinigungsverfahren I a) (erfindungsgemäß)
Unter Bedingungen wie in Patentbeispiel 1) wurde eine Abwasserreinigung im Festbett durchgeführt.

Ergebnisse innerhalb 3 Wochen:

| | erfindungs-gemäß | ohne Träger-masse (Vergleichsversuch) |
|---|---|---|
| $CSB_5$-Abbau | 38 % | 8 % |
| Daphnientoxizität | 1 : 900 | 1 : 5.000 - Verdünnung |
| Geruchsschwellenwert | 1 : 140 | 1 : 1.000 - Verdünnung |

Farbaufhellung:

| Transmission bei | 600 nm | 500 nm | 400 nm |
|---|---|---|---|
| Ergebnis (%) | 87,0 | 80,5 | 57,0 (erfindungsgemäß) |
| Ergebnis (%) | 50,0 | 37,5 | 20,0 (Vergleichsversuch) |

**Beispiel 3**

Trägermaterial aus kationischen Polyurethan(harnstoff) mit 66,6 Gew.-% Seesand als Füllstoff
Nach dem allgemeinen Verfahren wird ein kationischer Polyurethan(harnstoff) aus Isocyanat-Prepolymer KI-PP-A und Seesand (Feinheit unter 300 µm) hergestellt, (10 Gew.-Teile kationisches NCO-Prepolymer KI-PP-A, 70 Gew.-Teile Wasser, 20 Gew.-Teile Seesand). Das erhaltene Granulat wird zu einer Größe unter 12 mm zerkleinert eingesetzt. Der Trockensubstanzgehalt beträgt 125 g/l Suspension, die Schüttgewichte S1): 728 g/l (abgetropft); S2): 620 g/l (ausgequetscht); S3): 406 g/l (getrocknet). Das Trägermaterial wurde in einer Wirbelbett-Apparatur (Reinigungsverfahren I b)) eingesetzt. Die Trägermasse nach Beispiel 3 sedimentiert (im Gegensatz zum Vergleichsbeispiel 5) und kann deshalb sowohl im Festbett- wie auch im Wirbelbett-Verfahren Verwendung finden. Seesand als alleiniger Füllstoff ist jedoch begrenzt wirksam bezüglich der Effekte bei der biologischen Abwasserreinigung. Gute Ergebnisse lassen sich jedoch erzielen, wenn ein Teil des Seesandes durch hydrophile Füllstoffe wie Braunkohle ersetzt wird (siehe Beispiel 4).

**Beispiel 4**

Trägermaterial aus kationischem Polyurethan(harnstoff) mit je 33,3 Gew.-% Seesand und 33 Gew.-% Braunkohlenstaub (bezogen auf Trockensubstanz)

Es wird wie in Beispiel 3 verfahren, jedoch die halbe Menge Seesand durch Braunkohlenstaub (als Trockensubstanz gerechnet = 10 Teile) ersetzt. Dazu wurden 11,25 Teile Braunkohlenstaub mit 11 % Restfeuchte eingesetzt. Das unter 12 mm Stückgröße zerkleinerte Granulat hat einen Trockensubstanzgehalt TS-S von 84,5 g/l Suspension. Die Schüttgewichte betragen: S1): 645 g/l; S2): 566 g/l; S3): 302 g/l; die Wasseraufnahmefähigkeit WHF = 91.7 % und der Quellfaktor F3 beträgt 5,6.

Erfindungsgemäße Verwendung der Trägermaterialien von Beispiel 3 und 4 im biologischen Reinigungsverfahren Ia (Festbett-Methode)

Volumen 100 l, davon 75 Vol.-% mit obigen Trägermaterialien gefüllt. Zu- und Ablauf 25 l/h.

Die biologischen Ergebnisse sind zusammengefaßt folgende:

| | Patentbeispiel 3 | 4 | Vergleich ohne Trägermaterial |
|---|---|---|---|
| $CSB_5$-Abbau | 24 | 35 | 9 |
| Daphnientoxizität bei Verdünnung von | 1:3000 | 1:450 | 1:3300 |
| Geruchsschwellenwert bei Verdünnung von | 1:900 | 1:290 | 1:950 |

| Farbaufhellung: | | | | | | |
|---|---|---|---|---|---|---|
| Transmission bei | 600 nm | | 500 nm | | 400 nm | |
| Beispiel | 3 | 4 | 3 | 4 | 3 | 4 |
| Ergebnis | 79 | 90 | 69 | 85 | 55 | 68 |
| Vergleich ohne Träger | 76 | | 67 | | 52 | |

**Beispiel 5** - Vergleichsversuch zu dem Beispiel 1 - 4 -

nicht erfindungsgemäß

5.1 Trägermaterial:

Es wird ein kationischer Polyurethan(harnstoff) aus Isocyanatprepolymer KIPP-A, jedoch ohne Füllstoff hergestellt (15 Teile NCO-Prepolymer KIPP-A und 85 Teile Wasser). Das erhaltene Granulat wird unter 12 mm zerkleinert eingesetzt.

5.2 Biologisches Abwasserreinigungsverfahren:

Die Substanz nach Beispiel 5 (Vergleich) mußte in einer Rührapparatur (Reinigungsverfahren II/Fig. 2) eingesetzt werden, da dieses Trägermaterial (ohne Füllstoff!) in einer Festbett-Apparatur selbst noch nach Wochen aufschwamm. In einer Wirbelbett-Apparatur nach Verfahren I b) ist dieses Material absolut unbrauchbar.

Der Trockensubstanzgehalt TS-S (g/l Suspension) von Beispiel 5 - Granulat betrug 36 g/l, die Schüttgewichte: S1: 520 g/l (abgetropft); S2: 490 g/l (ausgequetscht) und S3: 219 g/l (getrocknet).

**Beispiel 6**

6.1 Trägermaterial:

Kationische Polyurethan(harnstoff)masse, gefüllt mit 50 Gew.-% Braunkohlenstaub und 25 Gew.-% (bezogen auf Trockensubstanz) Schwarztorf.

Nach dem üblichen Verfahren (wie in der Herstellungsvorschrift A beschrieben) werden

22,47 Gew.-Teile einer Braunkohle mit 11 % Restfeuchte (entsprechend 20 Gew.-Teile Braunkohle-Trockensubstanz) in zerkleinerter Form (unter 100 µm) 12,35 Gew.-Teile Schwarztorf mit 19 % Restfeuchte (entsprechend 10 Gew.-Teilen Schwarztorf-Trockensubstanz), mit einem Faseranteil von 8 Gew.-%, unter 200 µm zerkleinert, werden mit 10 Gew.-Teilen einer Mischung des kationischen Prepolymers KIPP-B und des nichtionischen NCO-Prepolymers OPP-H im Gewichtsverhältnis 3:2, enthaltend 4,5 Gew.-% NCO im Prepolymer, und 55,3 Gew.-Teilen Wasser umgesetzt. Der entstandene hochgefüllte Polyurethan(harnstoff)-Träger wird zu einem Granulat unter 200 mm Stückgröße zerkleinert. In Wasser suspendiert beträgt der Gehalt an Trockensubstanz TS-S 108 g/l, die Schüttgewichte betragen:

Abgetropft: 386 g/l, (S1)
Ausgequetscht: 412 g/l, (S2)
Getrocknet: 158 g/l (S3).

6.2 Biologisches Reinigungsverfahren nach Ia) und Ib)
Der füllstoffhaltige Polyurethan(harnstoff)-Träger wird in den ersten 4 Wochen nach dem Verfahren Ia) in einem Festbett, danach 4 Wochen in einem Verfahren nach Ib), in einem Wirbelbett verwendet. Das Volumen beträgt 100 l, 75 Vol.-% wurden mit obigem Trägermaterial gefüllt. Der Ablauf/Zulauf betrug 25 l/h. Die Ergebnisse sind in der folgenden Zusammenstellung zusammengefaßt:

| Reinigungsverfahren | erfindungsgemäß Ia) Festbett | Ib) Wirbelbett | Vergleich ohne Trägermaterial |
|---|---|---|---|
| $CSB_5$-Abbau | 39 % | 36 % | 5 % |
| Daphnientoxizität | 1 : 140 | 1 : 160 | 1 : 3.500 |
| Geruchsschwellenwert | 1 : 180 | 1 : 200 | 1 : 1.000 |

**Farbaufhellung:**

| Transmission bei | 600 nm Ia) | 600 nm Ib) | 500 nm Ia) | 500 nm Ib) | 400 nm Ia) | 400 nm Ib) |
|---|---|---|---|---|---|---|
| Ergebnis (erfindungsgemäß) | 87,5% | 93,5% | 81,0% | 88,0% | 61,0% | 68,0% |
| Ergebnis (Vergleich ohne Trägermaterial) | 50,0% | 64,5% | 37,5% | 53,0% | 20,5% | 31,5% |

Ersetzt man den 11 % Restfeuchte enthaltenden Braunkohlenstaub durch eine entsprechende Menge an voll getrocknetem Braunkohlestaub (< 1 Gew.-% Wasser), werden beim obigen Abwasserreinigungsverfahren praktisch gleiche Ergebnisse erzielt; es ist daher in der Praxis nicht erforderlich, einen solchen Trockenprozeß für den Braunkohlenstaub vorangehen zu lassen. Außerdem ist die Rückschwellung und Benetzung völlig getrockneter Braunkohlenstäube sowohl zeitraubend als auch technologisch erschwert.

**Beispiel 7**

Kationische Polyurethan(harnstoff)masse, gefüllt mit 40 Gew.-% Schwarztorf und 28 Gew.-% Anthrazitstaub
Eine kationische Polyurethan(harnstoff)masse nach Herstellungsmethode A aus 12,3 Gew.-Teilen Schwarztorf wie in Patentbeispiel 6 (10 Gew.-% wasserfreier Schwarztorf) 7 Gew.-Teile Anthrazitstaub, unter 90 µm zerkleinert, 8 Gew.-Teile der kationischen NCO-Prepolymer-Mischung von Beispiel 6.1 (4,5 % NCO) und 73 Gew.-Teile Wasser werden wie üblich umgesetzt und zu einem Granulat unter 12 mm zerkleinert. In Wasser suspendiert beträgt der Gehalt an Trockensubstanz 87 g/l. Schüttgewichte sind:

Abgetropft: 538 g/l (S1),
Ausgequetscht: 408 g/l (S2),
Getrocknet: 172 g/l (S3).

Verwendung im biologischen Reinigungsverfahren Ia):
Es wird in der für das Verfahren angegebenen Weise ein Festbettvolumen von 100 l zu 70 Vol.-% mit obigem Trägermaterial gefüllt, der Zu-/Ablauf beträgt 25 l/h. Die Ergebnisse innerhalb von 4 Wochen sind:

| | erfindungsgemäß | Vergleich ohne Trägermaterial |
|---|---|---|
| $CSB_5$-Abbau | 36 % | 9 % |
| Daphnientoxizität | 1 : 300 | 1 : 2.500 - Verdünnung |
| Geruchsschwellenwert | 1 : 450 | 1 : 960 Verdünnung |

Farbaufhellung:

| Transmission bei | 600 nm | 500 nm | 400 nm |
|---|---|---|---|
| Ergebnis | 96 % | 90 % | 74 % erfindungsgemäß) |
| Ergebnis | 87 % | 79 % | 57 % (Vergleichsbeispiel) |

**Beispiel 8**

8.1 Trägermaterial:
Kationische Polyurethan(harnstoff)masse mit 50 Gew.-% Schwarztorf (Trockenmasse)

In üblicher Weise wird nach der Herstellungsmethode A eine kationische Polyurethanmasse aus 24,7 Gew.-Teilen Schwarztorf wie in Patentbeispiel 6 (entsprechend 20 Gew.-Teilen wasserfreiem Schwarztorf), (hydrophobes NCO-Prepolymer mit 5,9 Gew.-% NCO) und 56,3 Gew.-Teilen Wasser zur hochgefüllten Trägersubstanz umgesetzt und diese unter 12 mm granuliert. In Wasser suspendiert beträgt der Feststoffgehalt 69,3 g/l. Die Schüttgewichte betragen:

Abgetropft: 379 g/l (S1),
Ausgequetscht: 377 g/l (S2),
Getrocknet: 140 g/l (S3).

8.2 Verwendung im biologischen Reinigungsverfahren Ia)
Ein Festbettvolumen von 100 l wird zu 75 Vol.-% mit obigem Trägermaterial gefüllt, der Zulauf/Ablauf beträgt 25 l/h. Ergebnisse innerhalb von 4 Wochen:

| | erfindungsgemäß | Vergleich ohne Trägermaterial |
|---|---|---|
| $CSB_5$-Abbau | 35 % | 7 % |
| Daphnientoxizität | 1 : 500 | 1 : 4.000 - Verdünnung |
| Geruchsschwellenwert | 1 : 867 | 1 : 345 - Verdünnung |

Farbaufhellung:

| Transmission bei | 600 nm | 500 nm | 400 nm |
|---|---|---|---|
| Ergebnis (erfindungsgemäß) | 94 % | 87 % | 73 % |
| Ergebnis (Vergleichsbeispiel) | 83 % | 76 % | 53 % |

**Beispiele 9 bis 21**

Hochgefüllte, langsam sedimentierende Polyurethan(harnstoff)massen aus Polyurethan-Weich- und Hart-Schaumstoffabfällen, weiteren Füllstoffen und NCO-Verbindungen

1. Charakteristik der im Beispielteil als Füllstoffe verwendeten Schaumstoffe

a) Weichschaumstoffe

Bei den drei Weichschaumstoffen WSB 14, 90 und 61 wurden Mischungen verschiedener Raumgewichte (von ca. 15 bis ca. 110 kg/m³) aus der großtechnischen Polyether-Polyurethan-Block- und Formschaumstoff-Produktion verwendet.

WSB-14:

Das Trockenschüttgewicht des überwiegend aus Blockschaumstoff-Abfall bestehenden Weichschaums beträgt etwa 14 g/l. Teilchengröße von 1 mm bis 20 mm, gelegentlich bis 25 mm.

Schüttgewichte nach Suspendierung in Wasser S1: 263 g/l; S2: 101 g/l; S3: 14 g/l; TS-S (Gehalt an Trockensubstanz in Wassersuspension): 12,5 g/l Suspension.

WSF-61:

Weichschaumabfall aus Formenaustrieb, mit einem sehr hohen Anteil an Schwarte (zäher Außenhaut), Schüttgewichte S1: 365 g/l; S2: 199 g/l; S3: 61 g/l; TS-S 51,7 g/l Suspension.

WSB-90:

Blockweichschaumabfälle; Teilchengrößen 1 bis 12 mm; Schüttgewichte S1: 365 g/l; S2: 199 g/l; S3: 40 g/l; Trockensubstanz TS-S 35 g/l Suspension.

b) Block-Hartschaumstoff-Abfälle

HSB-65

Die Schüttgewichte des aus Block-Hartschaumstoffabfällen bestehenden Granulats mit Teilchengrößen unter 2 mm betragen: S1: 896 g/l; S2: 457 g/l; S3: 65 g/l.

2. Vergleichsversuche mit unmodifizierten Schaumstoffen:

Nicht mit Polyurethanvorprodukten gebundene PU-Schaumstoffe sind für die biologische Abwasserreinigung in der Praxis völlig unbrauchbar, da die Schaumstoffe obenauf schwimmen (vgl. Tabelle 2).

Auch bei einem weiteren Vergleichsversuch in einer Rührapparatur mit einem auf eine Größe unter 12 mm zerkleinerten, einheitlichen Blockweichschaum relativ hoher Dichte (Schüttgewicht 36 g/l; Raumgewicht 90 g/l) schwamm sogar noch nach drei Monaten Wasserlagerung bei kurzer Unterbrechung der Rührwirkung der größte Teil des Materials sofort obenauf. Die Anwendung eines Wirbelbettes war mit diesem Schaumstoff nicht möglich. PU-Hartschaumstoff-Granulate sind gleichfalls ungeeignet, da sie obenauf schwimmen und außerdem zu spröde sind und zu feinteiligem Abrieb führen.

Trägt man beispielsweise Aktivkohlepulver in die wäßrige Suspension der unter 1 a) oder 1 b) genannten Schaumstoffe ein, so zeigen die Versuche, daß dieses vom Schaumstoff nicht gebunden wird. Aktivkohle läßt sich in feuchtem Schaumstoff unter gewissen Bedingungen zwar einquetschen, beim Suspendieren im Wasser wird die Aktivkohle jedoch wieder weitgehendst ausgespült.

3. Herstellung des erfindungsgemäßen Trägermaterials (nach diskontinuierlichen Verfahren).

Die Herstellung der in den Patentbeispielen 9 bis 21 verwendeten, hochgefüllten Polyurethan(harnstoff)massen erfolgt bei Raumtemperatur entweder in einem Intensivmischer, der aus einem zylindrischen Behälter besteht, der auf einem drehbaren Teller schräg befestigt ist und mit einem exzentrisch einbringbaren Rührwerk ausgestattet ist, das in entgegengesetzter Richtung zur Tellerdrehung läuft, oder man verwendet horizontal montierte Mischer, die mit pflugscharähnlichen Werkzeugen ausgerüstet sind.

Der zerkleinerte Polyurethanschaumstoff-Abfall und die erforderliche Wassermenge werden vorgelegt, dann der Füllstoff, z.B. Braunkohle, gleichmäßig eingemischt und danach in einem feinen Strahl das NCO-Prepolymer mit Hilfe einer Zahnradpumpe zudosiert. Gegebenenfalls erfolgt als Letztes die Zugabe des Katalysators K (in Form einer auf das Zwanzigfache verdünnten wäßrigen Emulsion). Das Rühren wird, nachdem alle Komponenten eingemischt sind, nach wenigen Minuten abgebrochen und das Trägermaterial in etwa 10 cm hoher Schicht 10 bis 90 Min. ausgebreitet, bis die Isocyanatreaktionen weitgehend beendet sind.

Das Trägermaterial wird gegebenenfalls zerkleinert und mit viel Wasser mehrmals gewaschen und kann danach direkt oder zu einem späteren Zeitpunkt für die erfindungsgemäße biologische Reinigung eingesetzt werden.

Die Zusammensetzung der Träger nach Beispiel 9 bis 23 sind in der Tabelle 2 wiedergegeben.

4. Ergebnisse der Prüfung auf Verwendbarkeit der Träger nach Beispielen 9 bis 24 (Ergebnisse siehe Tabelle 3).

In der Tabelle 4 werden eine Reihe von Meßwerten der Träger nach Beispiel 9 bis 24 zusammenfassend einander gegegenübergestellt.

**Trägermaterial Beispiel 22 und 23**

Vorschrift für die kontinuierliche Herstellung (nicht erfindungsgemäß)

Zusammensetzung siehe Tabelle 2

Als Apparatur dient ein Doppelpaddel-Schneckentrog mit einem Fassungsvolumen von ca. 180 l und einer

Länge von ca. 300 cm, und dessen Paddelwellen sich gegenläufig drehen. Die Produktförderung erfolgt zwangsweise von der Eintragsöffnung in Richtung Austragsöffnung, wobei zwischen den Paddelwellen eine gewisse Knetung bzw. Quetschung des Reaktionsgemisches erfolgt. Der unter 12 bzw. 25 mm zerkleinerte Polyurethanschaumstoff und der Braunkohlenstaub werden getrennt über Dosierschnecken in den Schneckentrog gefördert. An gleicher Stelle wird mittels Kolbenpumpen das Wasser und mittels Zahnradpumpen das NCO-Prepolymer eingetragen. Es ist zweckmäßig, aber nicht unbedingt erforderlich, das kationische NCO-Prepolymere mit der etwa 10-fachen Menge Wasser von etwa 10 bis 25°C in einem Durchflußmischer oder statischen Mischer innerhalb weniger Sekunden intensiv zu vermischen, weil dadurch der vorgetrocknete Braunkohlenstaub außerordentlich schnell und gleichmäßig mit der getrennt zudosierten Restmenge des auf 50°C erhitzten Wassers benetzt wird und die NCO-Prepolymeren in feinstverteilter Form die Feststoffe und Schaumstoffe gleichmäßig umhüllen.

Nach einer Verweilzeit im Schneckentrog von 2 - 3 Minuten wird durch eine am Ende des Troges unten befindlichen Öffnung in bis zur Hälfte mit Wasser gefüllten Behältern ausgetragen und nach etwa 2 Stunden oder später mit Wasser gewaschen.

**Tabelle 2**

Zusammensetzung der hochgefüllten Polyurethan(Wasserstoff)-Trägermassen für die Patentbeispiele 9 bis 24

| Patent beispiele | Füllstoffe: (Abfall) Schaumstoff Menge/Typ | | Füllstoffe: (Abfall) Schaumstoff Siebgröße (um) | Füllstoffe: Andere Menge Art | Füllst. Siebgröße (um) | NCO-Prepolymer Menge | NCO-Prepolymer Art | NCO-Prepolymer % NCO-geh. | Wasser-Menge | Zusatz Menge/Art | Trockensubstanz (g/l) Suspension (TB-S) | Schüttgewicht abgetropft S-1 | Schüttgewicht ausgequetscht (g/l) S-2 | Schüttgewicht getrock- S-3 |
|---|---|---|---|---|---|---|---|---|---|---|---|---|---|---|
| 9 | 5 | WSB-14 | 20 | 6 BKK<br>5 TDIR | 100 | 3,5<br>1,5 | KI PP-A<br>I PP-D | 5,1<br>4,9 | 79 | - | 79 | 448 | 306 | 87 |
| 10 | 7,5 | WSB-14 | 12 | 10 BK | 100 | 3,5 | KOPP1-E | 5,9 | 79 | K | 44 | 528 | 200 | 66 |
| 11 | 5 | WSB-14 | 20 | 5 BK<br>5 BKK | 90 | 6 | KOPP2-F | 3,2 | 79 | K | 85 | 470 | 295 | 84 |
| 12 | 20 | WSF-61 | 12 | 10 BK | 100 | 3,5<br>1,5 | KIOPP-B<br>OPP-H | 5,3<br>3,3 | 65 | - | 110 | 581 | 328 | 100 |
| 13 | 7 | WSB-14 | 12 | 7 AK | 30 | 5 | KI PP-A | 5,1 | 81 | - | 65 | 471 | 201 | 66 |
| 14 | 7,5 | WSB-90 | 12 | - | | 5<br>2,5 | KI PP-A<br>I PP-D | 5,1<br>4,9 | 85 | - | 60 | 579 | 479 | 131 |
| 15 | 7,5 | WSB-14 | 12 | | | 3,0 | KI PP-A | 5,1 | 84,5 | 5 Fe 1 | 40 | 514 | 124 | 31 |
| 16 | 3,5 | HSB-65 | 2 | 25 BK | 100 | 20 | KO PP2-F | 3,2 | 50 | 1,5 SIG | 112 | 581 | 328 | 151 |
| 17 | 10 | WSB-14 | 12 | 10 BK | 100 | 4<br>4 | KI PP-A<br>I PP-D | 5,1<br>4,9 | 72 | - | 58 | 610 | 428 | 86 |
| 18 | 7 | WSB-14 | 12 | 10 BK | 100 | 5 | KI PP-A | 5,1 | 76 | 2Fe 2 | 74 | 631 | 346 | 90 |
| 19 | 10 | WSB-14 | 12 | 5 BK | 100 | 5 | BI PP-C | 5,6 | 78 | 2SIW | 56,8 | 632 | 234 | 67 |
| 20 | 10 | WSB-14 | 6 | 10 BK | 100 | 4 | KO PP1-E | 5,9 | 76 | K | 47 | 506 | 262 | 58 |
| 21 | 4,5 | WSB-14 | 12 | 11 SK | 90 | 3,5 | KI PP-A | 5,1 | 81 | - | 54 | 562 | 278 | 64 |
| 22 | 7,5 | WSB-14 | 25 | 15 BK | 100 | 7,5 | KO PP1-E | 5,9 | 70 | - | 61 | 279 | 221 | 82 |
| 23 | 7,5 | WSB-14 | 12 | 15 BK | 100 | 8,5 | KO PP1-E | 5,9 | 70 | - | 59 | 346 | 232 | 83 |
| 24 | 8 | WSB-14 | 12 | 11 BK | 100 | 8 | (K)OPP-I | 5,6 | 73 | - | 63 | 462 | 280 | 82 |

Mengenangaben in Gewichtsteilen, jeweils bezogen auf
K = 0,5 Gew.-% Dibutylzinndilaurat, bezogen auf NCO-Prepolymermenge
BK = Braunkohle - nativ (in Gew.-Teilen Trockensubstanz)
BKK = Braunkohlekoks
AK = Aktivkohle
SK = Steinkohlenstaub (Anthrazitstaub)
KI = Kationisch-hydrophiles NCO-Prepolymer
I = Nichtionisches-hydrophiles NCO-Prepolymer
KO = Kationisch-hydrophobes NCO-Prepolymer
(K)O = Kationenbildendes hydrophobes NCO-Prepolymer
TDIR = In Wasser ausgerührter TDI-Sumpfrückstand unter 200 µm gemahlen
Fe 1 = Ferromagnetisches Eisenoxid ($Fe_3O_4$), Teilchengröße ca. 1 µm
Fe 2 = Eisenoxidpigment ($Fe_2O_3$), Teilchengröße ca. 1 µm
SIG = Kieselsol, 30 %ig in Wasser, spez. Oberfläche 200 $m^2/g$ zugegeben
SIW = Wasserglas, 10 %ige Lösung mit 5 Gew.-% Phosphorsäure, angeliert zugegeben

**Tabelle 3**

| Beispiel | Biolog. Rein.Meth. | Volumen der Vers. App.(l) | Füllvol. % | $CSB_5$ Abbau mg/l | Daphnientoxizität x-fache Verd. | Geruchsschwellenwert | Farbaufquellung (nm) 600 | 500 | 400 |
|---|---|---|---|---|---|---|---|---|---|
| 1 | 2 | 3 | 4 | 5 | 6 | 7 | 8 | 9 | 10 |
| 9 | Ia | 100 | 75 | 36/9 | 600/2.800 | 250/880 | 94/82 | 88/76 | 69/54 |
| 10 | Ib | 1.000 | 75 | 41/9 | 200/2.800 | 210/880 | 96/82 | 89/76 | 78/54 |
| 11 | Ia | 100 | 75 | 37/8 | 400/3.300 | 240/950 | 93/76 | 85/67 | 71/52 |
| 12 | Ia | 100 | 75 | 35/8 | 300/3.300 | 200/950 | 95/76 | 87/67 | 69/52 |
| 13 | Ib | 100 | 75 | 34/8 | 290/3.300 | 220/950 | 93/76 | 87/67 | 66/52 |
| 14 | II | 30 | 75 | 21/8 | 1800/3300 | 800/950 | 82/76 | 71/62 | 54/52 |
| 15 | Ib | 100 | 75 | 27/8 | 1400/3300 | 650/950 | 85/76 | 77/67 | 58/52 |
| 16 | Ib | 100 | 75 | 43/8 | 270/3.300 | 230/950 | 95/76 | 87/67 | 76/52 |
| 17 | Ib | 100 | 50 | 38/9 | 320/2.800 | 220/880 | 89/82 | 85/76 | 64/54 |
| 18 | Ib | 100 | 50 | 40/9 | 290/2.800 | 230/880 | 88/82 | 84/76 | 65/54 |
| 19 | Ia | 100 | 40 | 35/9 | 340/2.800 | 245/880 | 87/82 | 83/76 | 65/54 |
| 20 | Ib | 100 | 75 | 39/9 | 295/2.800 | 250/880 | 87/82 | 84/76 | 64/54 |
| 21 | Ib | 100 | 75 | 28/9 | 1200/2.800 | 590/880 | 86/82 | 78/76 | 58/54 |

**Fortsetzung Tabelle 3**

In den Spalten 9 bis 10 werden vor dem Schrägstrich die Versuchsergebnisse mit den erfindungsgemäß eingesezten Polyurethanharnstoff-Trägermassen, hinter dem Schrägstrich die Ergebnisse der Parallelversuche ohne Träger angegeben.

Die Ergebnisse der Patentbeispiele 9 bis 18 wurden innerhalb der ersten 4 Wochen, von Patentbeispiel 14 nach 10 Wochen erzielt. Die durchschnittliche Verweilzeit betrug 4 Stunden.

Die Ergebnisse der Substanzen nach Beispiel 22 und 23 der biologischen Abwasserreinigung über 57 Tage (d) Laufzeit werden in Figur 3a und 3b wiedergegeben. Dabei bedeuten in Figur 3a:

Kurve A den Ausgangsort CSB/5 (in mg/l), d.h. den CSB-Wert beim Einlauf in die Reinigungsstufe (als Einlauf wird der Auslauf der 1. Belebungsstufe einer Großanlage, die mit chemischen Abwässern beaufschlagt wurde, genommen). Für die Reinigungsstufe wird ein 100 Liter-Festbett-Bioreaktor, Füllgrad 65 %, entsprechend Verfahren I a verwendet.

Kurve B gibt die CSB/5-Werte des Blindversuchs erfindungsgemäßer Träger wieder.

Kurve C gibt die CSB/5-Werte unter Verwendung von Trägermassen entsprechend Beispiel 22, Kurve D die CSB/5-Werte entsprechend Beispiel 23 wieder.

In den Kurven B, C, D werden jeweils die CSB/5-Werte nach 4 Stunden Verweilzeit des Abwassers in der Klärstufe wiedergegeben. In Figur 3b) wird die Aufhellung der Braunfärbung als Transmission (Tr.) bei 600 nm (in %) für den 47., 48. und 49. Tag (d) wiedergegeben.

Aus den Kurven ist zu erkennen, daß die in der Praxis häufig auftretenden Spitzenbelastungen (die oft das Doppelte der Mittelwerte betragen können) prozentual besonders wirksam abgebaut werden, sodaß in diesen Fällen die Restverunreinigung relativ konstant und niedrig bleibt. Ferner ist abzuleiten, daß die Größe der hochgefüllten Trägermassen ohne nennenswerte Abweichung der Abbauleistung stark variiert werden kann, doch ist für ein Fließ- oder Wirbelbett den kleineren Teilchengrößen der Vorzug zu geben.

Versuche entsprechend Beispielen 22 und 23, jedoch anstelle der 100 l-Modellanlage in einem halbtechnisch ausgelegtem 20 $m^3$-Reaktor mit einem Abwasservolumen von 15,5 $m^3$ (Füllung mit 65 Vol.-% Pu-Trägermasse), so werden die in der Modellanlage erzielten Abbauraten nochmals um ca. 20 bis 30 % - je nach Verunreinigungsgrad - gesteigert. Beispielsweise beträgt die CSB-Eliminierung bei ca. 300 mg/l bereits 48-54 %, bei ca. 500 mg/l sogar 62-66 %.

Der Ablauf des gereinigten Abwassers ist praktisch geruchlos, klar und nahezu farblos.

**Tabelle 4**

Volumen-, Quetsch- und Quellfaktoren der hochgefüllten Polyurethan(harnstoff)-Trägermassen

| | Beispiel | F 1 Volumen-Faktor | F 2 Quetsch-Faktor | F3 Quell-Faktor | F 4 Suspensions-Faktor | % WAF Wasseraufnahme | % FKS Feststoffgehalt |
|---|---|---|---|---|---|---|---|
| | 1 | 3,7 | 3,6 | 3,3 | 7,2 | 86,1 | 13,9 |
| | 2 | 5,8 | 4,5 | 4,4 | 9,1 | 89,0 | 11,9 |
| | 3 | 5,8 | 5,0 | 4,8 | 8,2 | 87,8 | 12,2 |
| | 4 | 8,0 | 6,7 | 5,6 | 12,0 | 91,7 | 8,3 |
| | 5 | 14,4 | 13,6 | 13,4 | 28,5 | 96,5 | 3,5 (Vergleich) |
| | 6 | 5,4 | 4,4 | 4,9 | 9,5 | 89,5 | 10,5 |
| | 7 | 6,2 | 4,7 | 6,0 | 11,6 | 91,4 | 8,6 |
| | 8 | 5,4 | 5,4 | 3,8 | 14,5 | 93,1 | 6,9 |
| | 9 | 5,7 | 3,9 | 5,9 | 13,2 | 92,4 | 7,6 |
| | 10 | 12,0 | 4,5 | 6,5 | 22,9 | 95,6 | 4,4 |
| | 11 | 5,5 | 3,5 | 5,1 | 12,0 | 91,7 | 8,3 |
| | 12 | 5,3 | 3,1 | 4,5 | 9,2 | 89,1 | 12,9 |
| | 13 | 7,3 | 3,1 | 4,8 | 15,7 | 93,6 | 6,4 |
| | 14 | 9,7 | 8,2 | 8,4 | 16,9 | 94,1 | 5,9 |
| | 15 | 13,0 | 3,1 | 8,3 | 25,2 | 96,1 | 3,9 |
| | 16 | 3,6 | 3,4 | 3,1 | 7,0 | 88,9 | 11,1 |
| | 17 | 10,5 | 7,4 | 5,6 | 17,4 | 94,3 | 5,7 |
| | 18 | 8,5 | 4,7 | 6,3 | 13,7 | 92,7 | 7,3 |
| | 19 | 11,1 | 4,1 | 6,5 | 17,7 | 94,4 | 5,6 |
| | 20 | 10,7 | 6,1 | 6,1 | 21,3 | 95,3 | 4,7 |
| | 21 | 10,4 | 5,1 | 6,1 | 18,7 | 94,7 | 5,3 |
| | Mittelwert (ohne Vergleichsbeispiel 5) | X= 7,7 | X=4,7 | X=5,5 | X=14,2 | X=92,0 | X=8,0 |
| | Ober- und Untergrenze (ohne Vergleichsbeispiel 5). | (3,6-13,0) | (3,1-8,2) | (3,1-8,4) | (7,2-25,2) | (86,1-95,6) | (3,9-13,9) |
| Nachtrag: | 22 | 4,6 | 3,6 | 3,3 | 16,4 | 93,4 | 6,1 |
| | 23 | 5,9 | 3,9 | 3,5 | 16,9 | 94,1 | 5,9 |
| | 24 | 9,6 | 4,0 | 2,9 | 16,3 | 93,7 | 6,3 |

**Fortsetzung Tabelle 4**

Die Differenz des % WAF-Wertes (Wasseraufnahmefähigkeit) auf 100 stellt den prozentualen Gehalt (% FKS) in der Suspension (ohne überstehendes Wasser) dar.

**Patentansprüche**

1. Verwendung von Polyurethanen als Träger für Biomassen zur biologischen Abwasserreinigung, dadurch gekennzeichnet, daß man keine wachstumsfähige Zellen bei der Herstellung enthaltende, nicht aufschwimmende, abriebfeste, hydrophile, hochgefüllte Polyurethan(harnstoffe)

mit einem Gehalt an Füllstoffen von mehr als 15 Gew.-% und einer Obergrenze von weniger als 95 Gew.-%, bezogen auf den wasserfreien Gehalt an füllstoffhaltigen Polyurethanen, und mit einer Wasseraufnahmefähigkeit von mehr als 33 und bis 97 Gew.-% Wasser, bezogen auf wassergequollenen, füllstoffhaltigen Polyurethan(harnstoff)-Träger in Suspension,

wobei als Füllstoffe

feinteilige fossile Lignocellulosen oder deren Folgeprodukte enthaltende Naturstoffe, und/oder Aktivkohle und/oder Korkmehl und/oder feinteilige, über 100°C schmelzende, organische Destillationsrückstände, insbesondere Destillationsrückstände der Toluylendiisocyanat-Herstellung, und/oder feinteilige anorganische Füllstoffe und/oder homogene oder zellige Kunststoffteilchen, insbesondere Polyurethan-Schaumstoff-Teilchen in Größen bis zu mehreren cm, benutzt werden,

und hydrophile und/oder hydrophobe Polyurethan(harnstoffe), welche vorzugsweise kationische Gruppen oder kationische Gruppen bildende Segmente enthalten, als die Füllstoffe bindende Matrix dienen, als Träger für Biomassen in der Klärflüssigkeit bei der biologischen Abwasserreinigung in einer Menge von mindestens 0,5 g Träger-Trockenmasse pro Liter Klärflüssigkeit einsetzt.

2. Verwendung nach Anspruch 1, dadurch gekennzeichnet, daß man füllstoffhaltige Polyurethan(harnstoffe) mit feinteiligen Lignocellulosen oder deren Folgeprodukte enthaltenden Naturstoffe der Reihe Torf und/oder Braunkohle, sowie Steinkohle, Koks oder Holzkohle als Füllstoffe benutzt.

3. Verwendung nach Ansprüchen 1 und 2, dadurch gekennzeichnet, daß man als feinteilige Lignocellulosen feinteiligen Schwarztorf und/oder Braunkohlenstaub benutzt.

4. Verwendung nach Ansprüchen 1 bis 3, dadurch gekennzeichnet, daß man Polyurethanschaumstoff-Teilchen, insbesondere Polyurethan-Weichschaum(abfall)-Teilchen in Teilchengrößen von 1 bis 30 mm als Füllstoffe benutzt.

5. Verwendung nach Ansprüchen 1 bis 4, dadurch gekennzeichnet, daß man Kombinationen von feinteiligen Lignocellulosen, insbesondere von Braunkohlenstaub und Schwarztorf und Polyurethanschaumstoff-Teilchen, insbesondere Polyurethanweichschaum(abfall)-Teilchen als Füllstoffe benutzt.

6. Verwendung nach Ansprüchen 1 bis 5, dadurch gekennzeichnet, daß man feinteilige anorganische Füllstoffe in Anteilen neben feinteiligen Lignocellulosen, insbesondere Braunkohlepulver und/oder Schwarztorf neben Polyurethanschaumstoff-Teilchen, als Füllstoffe benutzt.

7. Verwendung nach Ansprüchen 1 bis 6, dadurch gekennzeichnet, daß hydrophile oder hydrophobe Polyurethan(harnstoffe) in Mengen von 5 bis 85 Gew.-% der füllstoffhaltigen Trägermasse (als Feststoff) als bindende PU-Matrix dienen.

8. Verwendung nach Ansprüchen 1 bis 7, dadurch gekennzeichnet, daß hydrophobe, kationische oder kationbildende modifizierte Polyurethane in Mengen von 5 bis 85 Gew.-% der füllstoffhaltigen Trägermasse (als Feststoff) als bindende PU-Matrix für hydrophile Füllstoffe, insbesondere Braunkohle und/oder Torf, und/oder Polyurethanschaumstoffteilchen, dienen.

9. Verwendung nach Ansprüchen 1 bis 8, dadurch gekennzeichnet, daß die Polyurethan(harnstoff)-Matrix kationische oder kationbildende Gruppen in Mengen von 10 bis 3000 Milliäquivalenten pro kg Polyurethanharnstoff enthält und als Füllstoffe Schwarztorf und/oder Braunkohle und/oder Polyurethanschaumstoffe und gegebenenfalls untergeordnete Mengen an anorganischen Festsubstanzen verwendet werden.

10. Verwendung nach Ansprüchen 1 bis 9, dadurch gekennzeichnet, daß die Polyurethanmatrix auf der Basis von Polyetherpolyolen mit $< 20$ Gew.-% an Oxyethylengruppen aufgebaut ist.

**Claims**

1. Use of polyurethanes, as carriers for biomasses for biological effluent purification,
characterised in that
non-floating, non-abrasive, hydrophilic, highly-filled polyurethane(ureas) which do not contain any cells capable of growth during production
having a content of fillers of more than 15 % by weight and an upper limit of less than 95 % by weight, based on the water-free content of filler-containing polyurethanes, and a water-absorbing capacity of more than 33 and up to 97 % by weight of water, based on the water-swollen, filler-containing polyuretnane(urea) carrier in suspension,
natural materials containing finely-divided, fossil lignocelluloses or the secondary products thereof,
and/or active carbon and/or cork powder and/or finely-divided, organic distillation residues which melt above 100°C, in particular distillation residues from the production of toluylene diisocyanate, and/or finely-divided, inorganic fillers and/or homogeneous or cellular plastic particles in particular polyurethane foam particles in sizes of up to several cm, being used as fillers, and hydrophilic and/or hydrophobic polyurethane (ureas) which preferably contain cationic groups or segments forming cationic groups, acting as the matrix binding the fillers, are used as carriers for biomasses in the clarification liquid in biological effluent purification in a quantity of at least 0.5 g of dry carrier material per litre of clarification liquid.

2. Use according to claim 1, characterised in that filler-containing polyurethane(urans) are used which contain, as fillers, finely-divided lignocelluloses or natural materials containing the secondary products thereof, from the series comprising peat and/or lignite, and hard coal, coke or wood charcoal.

3. Use according to claims 1 and 2, characterised in that finely-divided black peat and/or lignite dust is used as the finely-divied lignocelluloses.

4. Use according to claims 1 to 3, characterised in that polyurethane foam particles, in particular polyurethane flexible foam (waste) particles, are used as fillers in particles sizes of 1 to 30 mm.

5. Use according to claims 1 to 4, characterised in that combinations of finely-divided lignocelluloses, in particular lignite dust and black peat and polyurethane foam particles, in particular polyurethane flexible foam (waste) particles are used as fillers.

6. Use according to claims 1 to 5, characterised in that finely-divided, inorganic fillers in portions along with finely-divided lignocelluloses, in particular lignite powder and/or black peat along with polyurethane foam particles, are used as fillers.

7. Use according to claims 1 to 6, characterised in that hydrophilic or hydrophobic polyurethane(ureas) in quantities of 5 to 85 % by weight of the filler-containing carrier material (as solid matter) are used as the binding PU matrix.

8. Use according to claims 1 to 7, characterised in that hydrophobic, cationic or cation-forming modified polyurethanes in quantities of 5 to 85% by weight of the filler-containing carrier material (as solid matter) are used as the binding PU matrix for hydrophilic fillers, in particular lignite and/or peat, and/or polyurethane foam particles.

9. Use according to claims 1 to 8, characterised in that the polyurethane(urea) matrix contains cationic or cation-forming groups in quantities of 10 to 3000 milliequivalents per kg of polyurethane urea and black peat and/or lignite and/or polyurethane foams and optionally lesser quantities of inorganic solid substances are used as fillers.

10. Use according to claims 1 to 9, characterised in that the polyurethane matrix is synthesised on the basis of polyether polyols having < 20% by weight of oxyethylene groups.

**Revendications**

1. Utilisation de polyuréthanes comme supports pour biomasses servant à l'épuration biologique des eaux résiduaires, caractérisée en ce qu'on utilise des polyuréthanes(urées) fortement chargées hydrophiles, résistantes à l'attrition, ne flottant pas et ne contenant pas des cellules capables de croître au cours de la fabrication, comportant une teneur en matières de charge supérieure à 15% en poids avec une limite supérieure inférieure à 95% en poids par rapport à la teneur anhydre en polyuréthanes contenant les matières de charge, et avec une capacité d'absorption d'eau supérieure à 33 et allant jusqu'à 97% en poids d'eau par rapport aux supports de polyuréthanes(urées) contenant les matières de charge et gonflés d'eau qui se trouvent en suspension,

en utilisant comme matières de charge des lignocelluloses fossiles finement divisées ou des substances naturelles contenant leurs produits de filiation, et/ou du charbon actif et/ou de la farine de liège et/ou des résidus de distillation organiques finement divisés fondant au-dessus de 100°C, en particulier des résidus de distillation de la fabrication du toluylène-diisocyanate, et/ou de matières de charge minérales finement divisées et/ou des particules de matières plastiques homogènes ou cellulaires, en particulier des particules de mousses de polyuréthanes en des dimensions pouvant atteindre plusieurs cm, et des polyuréthanes(urées) hydrophiles et/ou hydrophobes qui contiennent de préférence des groupes cationiques ou des segments formant des groupes cationiques, qui servent de matrice pour lier les matières de charge,

en tant que supports pour biomasses dans le liquide de clarification dans l'épuration biologique des eaux résiduaires, en une quantite d'au moins 0,5 g de masse sèche de support par litre de liquide de clarification.

2. Utilisation selon la revendication 1, caractérisée en ce qu'on utilise comme matières de remplissage des polyuréthanes(urées) contenant des matières de charge avec des lignocelluloses finement divisées ou des substances naturelles contenant leurs produits de filiation appartenant à la série de la tourbe et/ou du lignite, de même que de la houille, du coke ou du charbon de bois.

3. Utilisation selon les revendications 1 et 2, caractérisée en ce qu'on utilise comme lignocelluloses finement divisées de la tourbe noire et/ou de la poussière de lignite finement divisées.

4. Utilisation selon les revendications 1 à 3, caractérisée en ce qu'on utilise comme matières de charge des particules de mousse de polyuréthane, en particulier des particules (de déchets) de mousse souple en polyuréthane, en des dimensions de particule allant de 1 à 30 mm.

5. Utilisation selon les revendications 1 à 4, caractérisée en ce qu'on utilise comme matières de charge des combinaisons de lignocelluloses finement divisées, en particulier de poussière de lignite et de tourbe noire, et des particules de mousses de polyuréthanes, en particulier des particules (de déchets) de mousse souple en polyuréthane.

6. Utilisation selon les revendications 1 à 5, caractérisée en ce qu'on utilise en partie comme matières de charge des matières de charge minérales finement divisées à côté de lignocelluloses finement divisées, en particulier de poudre de lignite et/ou de tourbe noire et à côté de particules de mousse en polyuréthane.

7. Utilisation selon les revendications 1 à 6, caractérisée en ce que des polyuréthanes(urées) hydrophiles ou hydrophobes, en des quantités de 5 à 85% en poids de la masse de support contenant des matières de charge (en matière sèche), servent en tant que matrice liante en PU.

8. Utilisation selon les revendications 1 à 7, caractérisée en ce que des polyuréthanes hydrophobes cationiques ou modifiés avec formation de cations servent, en des quantités de 5 à 85% en poids de la masse de support (matière sèche) contenant des charges, de matrice liante en PU pour des matières de charge hydrophiles, en particulier du lignite et/ou de la tourbe et/ou des particules de mousse en polyuréthane.

9. Utilisation selon les revendications 1 à 8, caractérisée en ce que la matrice de polyuréthane(urée) contient des groupes cationiques ou formateurs de cations en des quantités de 10 à 3000 milliequivalents par kg de polyurethane-urée et en ce qu'on utilise comme matières de charge de la tourbe noire et/ou du lignite et/ou des mousses de polyuréthane et éventuellement des quantités mineures de substances solides minérales.

10. Utilisation selon les revendications 1 à 9, caractérisée en ce que la matrice de polyuréthane est à base de polyétherpolyols comportant moins de 20% en poids de groupes oxyéthylène.

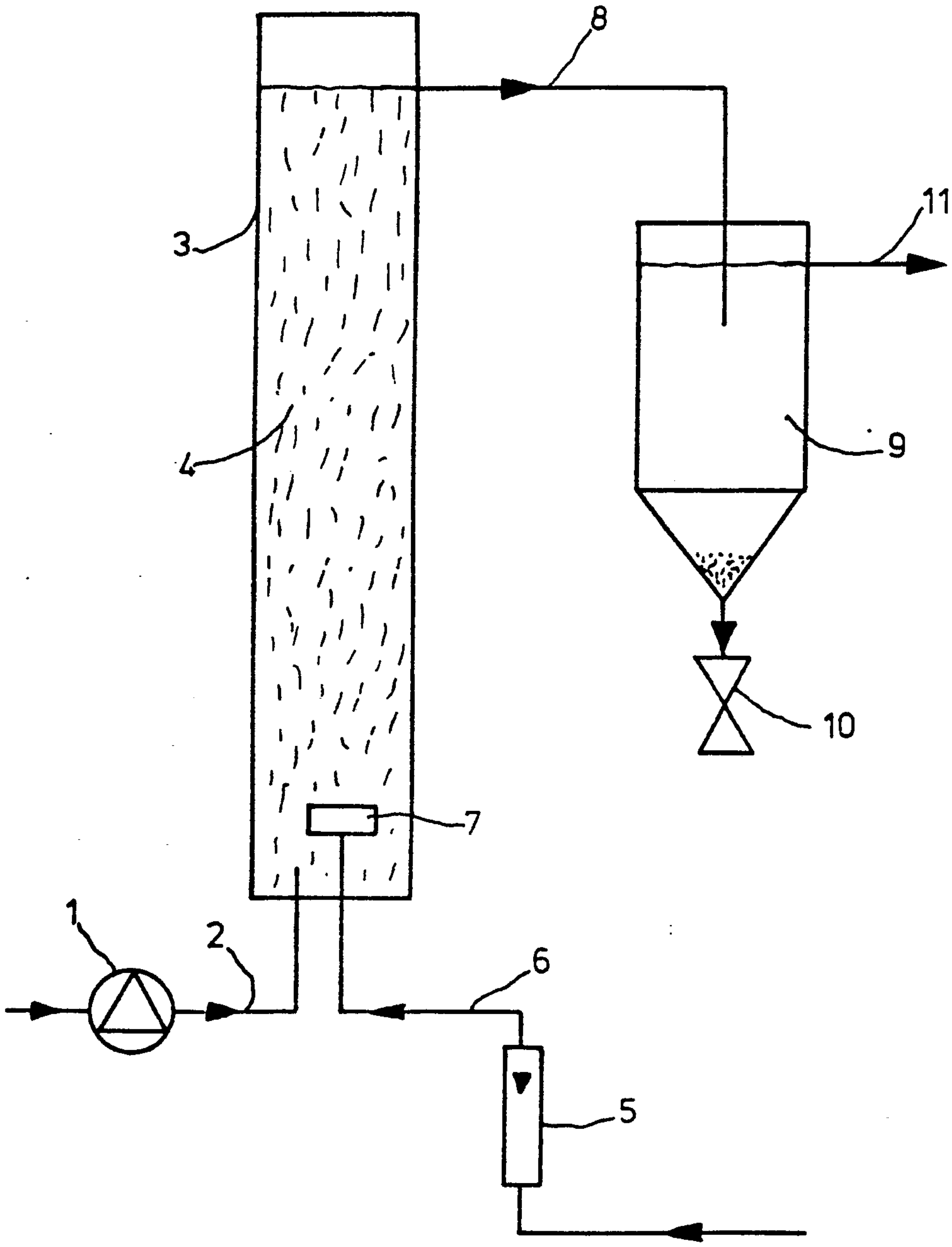


FIG. 1

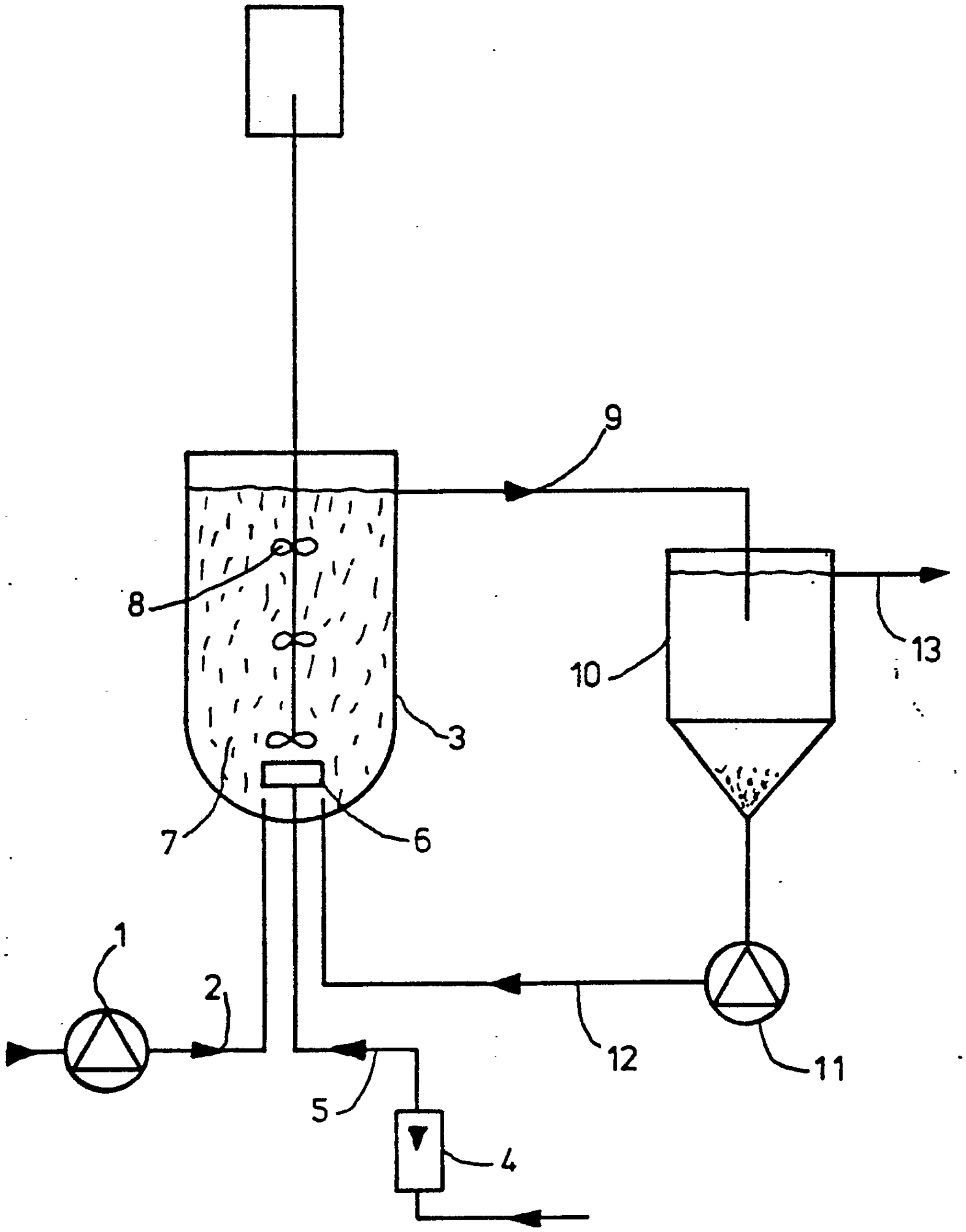


FIG. 2

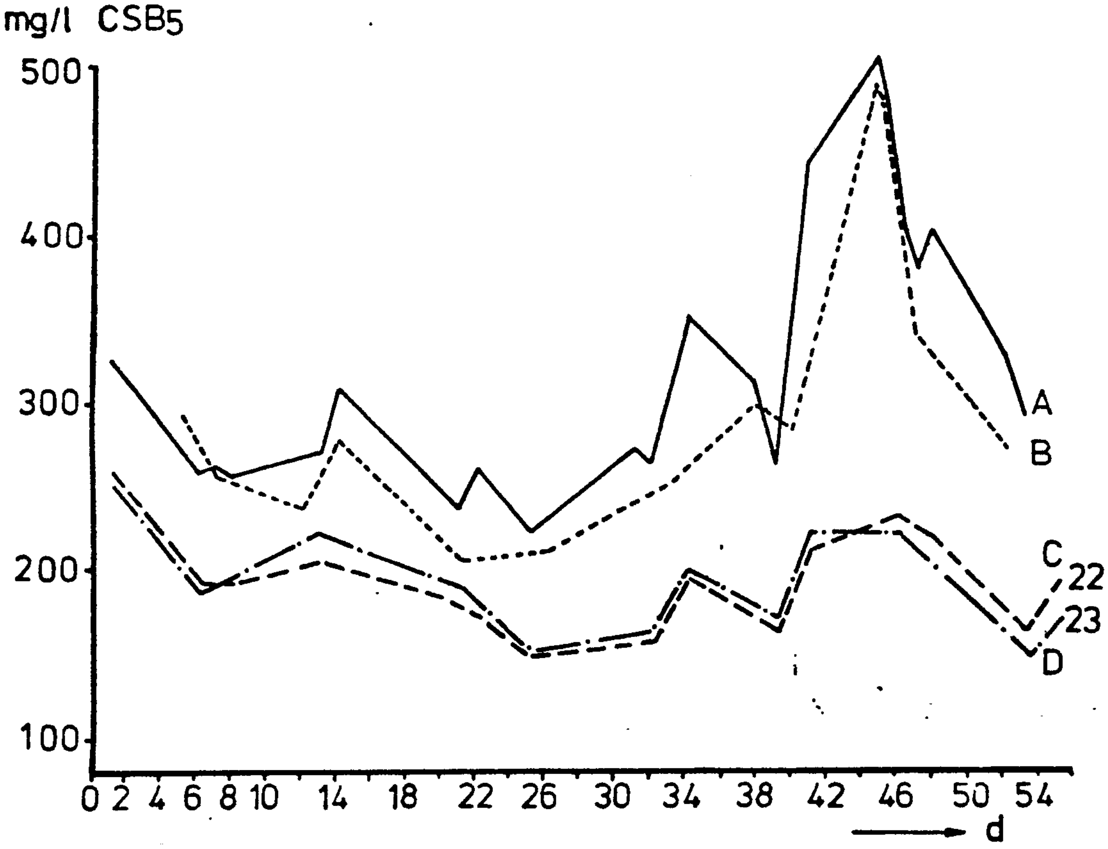
mg/l CSB5
500
400
300
200
100
0 2 4 6 8 10 14 18 22 26 30 34 38 42 46 50 54
d
A
B
C
22
23
D

FIG. 3a

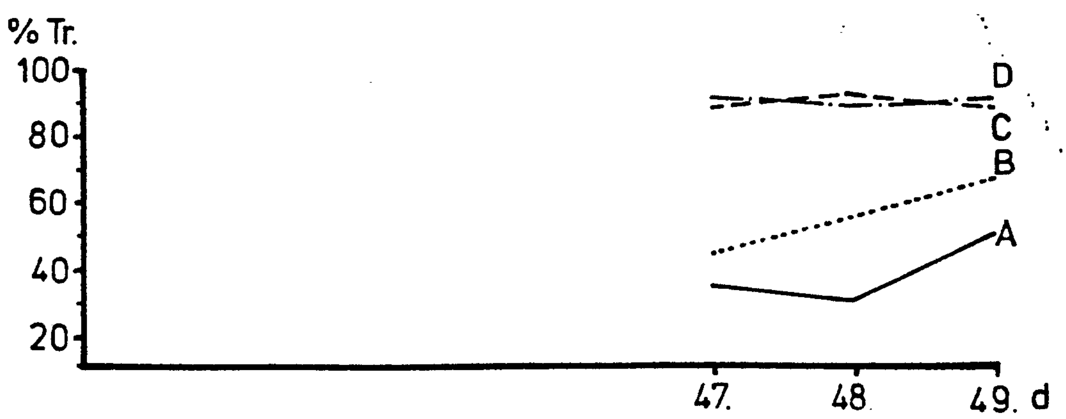
% Tr.
100
80
60
40
20
47.
48.
49. d
D
C
B
A

FIG. 3b